# EUROPÄISCHE PATENTSCHRIFT

(11) **EP 4 263 988 B1**
(45) Veröffentlichungstag und Bekanntmachung des Hinweises auf die Patenterteilung: **09.09.2026**
(21) Anmeldenummer: 21830920.1
(22) Anmeldetag: 14.12.2021
(51) Int. Cl.: E05D 15/26, E05D 15/58

(54) **FÜHRUNGSSYSTEM ZUR FÜHRUNG WENIGSTENS EINES TÜRFLÜGELS MIT WENIGSTENS EINER SCHALTVORRICHTUNG UND WENIGSTENS EINEM SENSOR**
GUIDING SYSTEM FOR GUIDING AT LEAST ONE DOOR LEAF, COMPRISING AT LEAST ONE SWITCH DEVICE AND AT LEAST ONE SENSOR
SYSTÈME DE GUIDAGE POUR GUIDER AU MOINS UN BATTANT DE PORTE, COMPRENANT AU MOINS UN DISPOSITIF DE COMMUTATION ET AU MOINS UN CAPTEUR

(30) Priorität: 17.12.2020 AT 5026720 U
(43) Veröffentlichungstag der Anmeldung: 25.10.2023
(73) Patentinhaber: Julius Blum GmbH, 6973 Höchst (AT)
(72) Erfinder: IRGANG, Markus, 6844 Altach (AT)
(74) Vertreter: Torggler & Hofmann Patentanwälte - Innsbruck
(86) Internationale Anmeldenummer: PCT/AT2021/060472
(87) Internationale Veröffentlichungsnummer: WO 2022/126163

(56) Entgegenhaltungen:
- WO-A1-2018/129575
- GB-A- 819 500
- US-A1- 2019 178 504

## Beschreibung

Die Erfindung betrifft ein Führungssystem zur Führung wenigstens eines Türflügels relativ zu einem Möbelkorpus, umfassend wenigstens einen Träger, an welchem der wenigstens eine Türflügel, vorzugsweise gelenkig, lagerbar ist, wenigstens eine, vorzugsweise wenigstens zwei, in einer Längsrichtung des wenigstens einen Trägers voneinander beabstandete Trägerführungsschiene(n) und wenigstens eine Führungsvorrichtung, mit welcher der wenigstens eine Träger an der wenigstens einen Trägerführungsschiene verschiebbar lagerbar oder gelagert ist, vorzugsweise in eine Richtung im Wesentlichen quer zu einer Längsrichtung des wenigstens einen Trägers.

Weiterhin betrifft die Erfindung eine Führungsanordnung zur Führung wenigstens eines Türflügels mit wenigstens zwei solchen Führungssystemen und ein Möbel mit einem Möbelkorpus und wenigstens einem Türflügel, wobei der Möbelkorpus wenigstens einen Innenraum aufweist, wobei der wenigstens eine Innenraum mit dem wenigstens einen Türflügel zumindest bereichsweise abdeckbar ist und in welchem wenigstens ein elektrisches Gerät angeordnet oder anordenbar ist.

Führungssysteme zur Führung wenigstens eines Türflügels relativ zu einem Möbelkorpus sind aus dem Stand der Technik bereits bekannt. Bei geschlossenen Türflügeln ist der Innenraum des Möbels nicht sichtbar. Damit kann nicht bestimmt werden, ob elektrische Geräte, welche im Innenraum des Möbels angeordnet sind, angeschaltet oder ausgeschaltet sind.

Wird von einem Benutzer vergessen, ein elektrisches Gerät vor dem Schließen der Türflügel auszuschalten, kann das elektrische Gerät über längere Zeit unbeabsichtigt und unbeaufsichtigt bei geschlossenen Türflügeln angeschaltet bleiben. Ein unbeaufsichtigtes elektrisches Gerät kann ein Sicherheitsrisiko darstellen, insbesondere wenn es sich bei dem elektrischen Gerät um ein Heizgerät wie einen Elektroofen handelt. Auch wird der Stromverbrauch durch ein unbeabsichtigt angeschaltetes elektrisches Gerät unnötigerweise erhöht. Dies trifft auch auf bezüglich der Sicherheit unbedenklichere Geräte, wie LED-Lampen, zu. US 2019/178504 A1 offenbart ein Beispiel eines Führungssystems.

Die Aufgabe der vorliegenden Erfindung besteht darin, diese Nachteile zumindest teilweise zu beheben und ein gegenüber dem Stand der Technik verbessertes Führungssystem, eine gegenüber dem Stand der Technik verbesserte Führungsanordnung und ein gegenüber dem Stand der Technik verbessertes Möbel anzugeben. Insbesondere besteht die Aufgabe der vorliegenden Erfindung darin, ein Führungssystem, eine Führungsanordnung und ein Möbel zu schaffen, welches sicher und stromsparend mit elektrischen Geräten betrieben werden kann.

Diese Aufgabe wird durch die Merkmale der Ansprüche 1, 12 und 14 gelöst.

Es ist erfindungsgemäß vorgesehen, dass das Führungssystem wenigstens eine Schaltvorrichtung und/oder wenigstens einen Sensor und vorzugsweise wenigstens eine Schnittstelle zur, vorzugsweise lösbaren, Befestigung der wenigstens einen Schaltvorrichtung und/oder des wenigstens einen Sensors umfasst, wobei die wenigstens eine Schaltvorrichtung und/oder der wenigstens eine Sensor dazu ausgebildet sind/ist, wenigstens ein Signal zu generieren, mit welchem die Stromzufuhr zu wenigstens einem elektrischen Gerät, vorzugsweise Küchengerät, unterbrechbar und/oder freigebbar ist.

Durch das Unterbrechen und/oder Freigeben der Stromzufuhr mittels wenigstens einem Signal kann sichergestellt werden, dass das wenigstens eine elektrische Gerät je nach Schaltstellung ausgeschaltet oder angeschaltet ist.

Es ist weiterhin erfindungsgemäß vorgesehen, dass die wenigstens eine Schaltvorrichtung und/oder der wenigstens eine Sensor und vorzugsweise die wenigstens eine Schnittstelle derart relativ zur wenigstens einen Trägerführungsschiene positioniert oder positionierbar ist, dass die wenigstens eine Schaltvorrichtung und/oder der wenigstens eine Sensor in wenigstens einer vorbestimmten Stellung des wenigstens einen Trägers und damit des wenigstens einen Türflügels relativ zur wenigstens einen Trägerführungsschiene schaltbar und/oder auslösbar ist.

Damit kann das wenigstens eine elektrische Gerät durch Bewegen des wenigstens einen Türflügels zu wenigstens einer vorbestimmten Stellung ausgeschaltet oder angeschaltet werden.

Es ist vorzugsweise vorgesehen, dass es sich bei der wenigstens einen vorbestimmten Stellung um eine Endstellung des wenigstens einen Trägers relativ zur wenigstens einen Trägerführungsschiene handelt.

Damit kann sichergestellt werden, dass das wenigstens eine elektrische Gerät nur bei vollständig geöffnetem Türflügel angeschaltet ist. Umgekehrt kann auch sichergestellt werden, dass das wenigstens eine elektrische Gerät nur bei vollständig geöffnetem Türflügel ausgeschaltet werden, beispielsweise eine Alarmanlage oder ein Rauchsensor.

Das wenigstens eine elektrische Gerät kann damit nicht mehr unbeabsichtigt unbeaufsichtigt sein. Dadurch wird die Sicherheit erhöht und unnötiger Stromverbrauch vermieden.

Eine erfindungsgemäße Führungsanordnung zur Führung wenigstens eines Türflügels relativ zu einem Möbelkorpus umfasst wenigstens zwei Führungssysteme.

Ein erfindungsgemäßes Möbel weist wenigstens ein Führungssystem oder wenigstens eine Führungsanordnung auf.

Erfindungsgemäß ist wenigstens eine Montagevorrichtung vorgesehen, an welcher die wenigstens eine Schaltvorrichtung und/oder der wenigstens eine Sensor oder zumindest eine Komponente der wenigstens einen Schaltvorrichtung und/oder des wenigstens einen Sensors ortsfest relativ zur wenigstens einen Trägerführungsschiene montierbar ist.

Dabei ist erfindungsgemäß wenigstens ein Adapter vorgesehen, mit welchem die wenigstens eine Schaltvorrichtung und/oder der wenigstens eine Sensor oder die zumindest eine Komponente der wenigstens einen Schaltvorrichtung in wenigstens zwei unterschiedlichen Abständen relativ zur wenigstens einen Montagevorrichtung montierbar ist. Damit kann die wenigstens eine Schaltvorrichtung und/oder der wenigstens eine Sensor oder die zumindest eine Komponente der wenigstens einen Schaltvorrichtung wie gewünscht positioniert werden. Damit können verschiedene Typen von Schaltvorrichtungen und/oder Sensoren so verbaut werden, dass sie verlässlich auslösen und/oder ansprechen.

In einem Ausführungsbeispiel weist der wenigstens eine Adapter wenigstens eine erste Befestigungsschnittstelle zur, vorzugsweise lösbaren, Befestigung des wenigstens einen Adapters an der wenigstens einen Montagevorrichtung und wenigstens eine davon in einer Höhenrichtung des wenigstens einen Adapters beabstandete zweite Befestigungsschnittstelle zur, vorzugsweise lösbaren, Befestigung der wenigstens einen Schaltvorrichtung und/oder des wenigstens einen Sensors oder der zumindest einen Komponente der wenigstens einen Schaltvorrichtung auf.

Damit beeinflusst der Abstand der zwei Befestigungsschnittstellen des Adapters den Abstand zwischen der wenigstens einen Montagevorrichtung und der wenigstens einen Schaltvorrichtung und/oder des wenigstens einen Sensors oder der zumindest einen Komponente der wenigstens einen Schaltvorrichtung und/oder des wenigstens einen Sensors.

Es kann vorgesehen sein, dass der wenigstens eine Adapter ausgewählt ist aus einer Gruppe von wenigstens zwei Adaptern, deren beide Befestigungsschnittstellen in Höhenrichtung unterschiedlich weit voneinander beabstandet sind. Durch die Wahl eines bestimmten Adapters kann damit der Abstand zwischen der wenigstens einen Montagevorrichtung und der wenigstens einen Schaltvorrichtung und/oder des wenigstens einen Sensors oder der zumindest einen Komponente der wenigstens einen Schaltvorrichtung und/oder des wenigstens einen Sensors eingestellt werden.

Es kann vorgesehen sein, dass der wenigstens eine Adapter wenigstens eine Einstellvorrichtung aufweist, mit welcher eine Lage der beiden Befestigungsschnittstellen relativ zueinander in Höhenrichtung einstellbar ist. Durch die Einstellvorrichtung kann damit der Abstand zwischen der wenigstens einen Montagevorrichtung und der wenigstens einen Schaltvorrichtung und/oder des wenigstens einen Sensors oder der zumindest einen Komponente der wenigstens einen Schaltvorrichtung und/oder des wenigstens einen Sensors eingestellt werden.

Es kann vorgesehen sein, dass die wenigstens eine Montagevorrichtung im Wesentlichen eben oder in einem Querschnitt im Wesentlichen brückenförmig ausgebildet ist.

Es kann vorgesehen sein, dass eine erste Montageschnittstelle zur, vorzugsweise lösbaren, Befestigung der wenigstens einen Montagevorrichtung an einer ersten Seitenwand des Möbelkorpus und eine zweite Montageschnittstelle zur, vorzugsweise lösbaren, Befestigung der wenigstens einen Montagevorrichtung an einer von der ersten Seitenwand beabstandeten zweiten Seitenwand des Möbelkorpus aufweist. Vorzugweise sind die Montageschnittstellen so ausgeformt, dass sie an einer Stirnseite der Seitenwände montierbar sind.

Damit kann der Abstand zwischen der ersten und der zweiten Seitenwand durch die wenigstens eine Montagevorrichtung überbrückt werden. Dadurch werden die beiden Seitenwände aneinander gehalten. Auch kann dadurch die wenigstens eine Schaltvorrichtung und/oder der wenigstens eine Sensor oder zumindest eine Komponente der Schaltvorrichtung zwischen den beiden Seitenwänden an der wenigstens einen Montagevorrichtung, vorzugsweise mittels Adapter, montiert werden.

In einem Ausführungsbeispiel weist der wenigstens eine Träger einen in Längsrichtung des wenigstens einen Trägers in einem Endbereich angeordneten Trägerkopf auf, wobei die wenigstens eine Schaltvorrichtung und/oder der wenigstens eine Sensor oder zumindest eine Komponente der wenigstens einen Schaltvorrichtung und/oder des wenigstens einen Sensors am Trägerkopf angeordnet oder anordenbar ist.

Es kann vorgesehen sein, dass der Trägerkopf zumindest in Längsrichtung des wenigstens einen Trägers relativ zu einem Grundkörper des wenigstens einen Trägers, vorzugsweise begrenzt, verschiebbar gelagert ist.

Es kann vorgesehen sein, dass der Trägerkopf wenigstens eine Parkposition für wenigstens einen mit dem wenigstens einen Türflügel verbindbaren Laufwagen aufweist.

Der Laufwagen kann an einer weiteren Führungsschiene, welche vorzugsweise quer zur Trägerführungsschiene angeordnet ist, führbar sein. Der Laufwagen kann mit dem wenigstens einen Türflügel und/oder mit wenigstens einem weiteren Türflügel verbindbar sein.

Es kann vorgesehen sein, dass der Trägerkopf an wenigstens einer Kopfführungsschiene verschiebbar gelagert oder lagerbar ist, wobei die wenigstens eine Kopfführungsschiene parallel zur wenigstens einen Trägerführungsschiene angeordnet oder anordenbar ist. Damit kann der Trägerkopf zusätzlich gestützt werden.

Es kann vorgesehen sein, dass die wenigstens eine Schaltvorrichtung und/oder der wenigstens eine Sensor oder zumindest eine Komponente der wenigstens einen Schaltvorrichtung und/oder des wenigstens einen Sensors über Befestigungsmittel, vorzugsweise lösbar, am Trägerkopf befestigbar ist.

Es kann vorgesehen sein, dass die Befestigungsmittel als Schrauben ausgebildet sind und/oder wenigstens ein Rastmittel umfassen. Mit Schrauben wird eine einfache Verbindung ermöglicht. Mit Rastmittel wird eine werkzeuglose Verbindung ermöglicht.

Es kann vorgesehen sein, dass die Befestigungsmittel derart ausgebildet sind, dass die wenigstens eine Schaltvorrichtung und/oder der wenigstens eine Sensor oder die zumindest eine Komponente der wenigstens einen Schaltvorrichtung und/oder des wenigstens einen Sensors mittels einer Montagebewegung im Wesentlichen quer zur Längsrichtung des wenigstens einen Trägers am Trägerkopf befestigbar ist.

Beispielsweise kann die wenigstens eine Schaltvorrichtung und/oder der wenigstens eine Sensor oder die zumindest eine Komponente der wenigstens einen Schaltvorrichtung und/oder des wenigstens einen Sensors mittels einer Montagebewegung in ein Rastmittel eingerastet werden.

In einem Ausführungsbeispiels ist vorgesehen, dass die wenigstens eine Schaltvorrichtung wenigstens eine erste Komponente und wenigstens eine zweite Komponente aufweist, vorzugsweise wobei die wenigstens eine erste Komponente bewegungsgekoppelt mit dem wenigstens einen Träger verbunden oder verbindbar ist und die wenigstens eine zweite Komponente relativ zur wenigstens einen Trägerführungsschiene ortsfest anordenbar ist.

Damit können die beiden Komponenten der Schaltvorrichtung durch die Bewegung des wenigstens einen Trägers aneinander angenähert werden. Dadurch kann ein Signal durch die Schaltvorrichtung generiert werden.

Die wenigstens eine erste Komponente der Schaltvorrichtung kann als Magnet und die wenigstens eine zweite Komponente der Schaltvorrichtung kann als Reedschalter ausgebildet sein, oder umgekehrt. Durch das Annähern des Magneten mittels einer Bewegung des Trägers kann der Reedschalter geschaltet werden.

Im Reedschalter kann damit magnetisch ein elektrischer Kontakt geschlossen werden. Durch das Schließen des elektrischen Kontaktes wird ein elektrisches Signal generiert, mit welchem die Stromzufuhr zu wenigstens einem elektrischen Gerät unterbrechbar und/oder freigebbar ist.

Es kann vorgesehen sein, dass die Schaltvorrichtung als Lichtschranke ausgebildet ist, vorzugsweise wobei der wenigstens eine Sensor als Lichtsensor ausgebildet ist. Der Träger und/oder der Türflügel kann die Lichtschranke unterbrechen, wobei ein Signal vom Lichtsensor generiert werden kann. Mit dem Signal kann die Stromzufuhr zu wenigstens einem elektrischen Gerät unterbrochen und/oder freigegeben werden.

Es kann wenigstens eine Steuervorrichtung vorgesehen sein, welche mit der wenigstens einen Schaltvorrichtung und/oder dem wenigstens einen Sensor, dem wenigstens einen elektrischen Gerät und wenigstens einer Stromquelle verbindbar ist. Durch die wenigstens eine Steuervorrichtung kann die Stromzufuhr zu wenigstens einem elektrischen Gerät bedingt durch ein Signal unterbrochen und/oder freigegeben werden.

Die Stromzufuhr kann ab einem Grenzwert einer durch das elektrische Gerät bezogenen elektrischen Leistung unterbrochen und/oder freigegeben werden. Damit kann ein elektrisches Gerät trotz unterbrochener Stromzufuhr mit wenig Leistung versorgt werden. Damit kann beispielsweise eine Uhr eines Elektroofens, welche wenig Leistung bezieht, auch bei unterbrochener Stromzufuhr weiterlaufen und muss nicht resettet werden, während ein Heizen des Elektroofens, welches eine große elektrische Leistung bezieht, nicht möglich ist.

Es sei hier angemerkt, dass nicht alle elektrischen Geräte im Möbel durch den Gegenstand dieser Anmeldung ab- oder anschaltbar sein müssen. Bei einem Kühlschrank ist beispielsweise ein Dauerbetrieb wünschenswert, dieser würde dann vorzugsweise entkoppelt von der Steuervorrichtung an eine Stromquelle angeschlossen werden.

In einem Ausführungsbeispiel ist wenigstens eine weitere Führungsschiene vorgesehen, welche im Wesentlichen quer zur Trägerführungsschiene anordenbar oder angeordnet ist, wobei wenigstens ein Laufwagen vorgesehen ist, mit welchem ein weiterer Türflügel, welcher gelenkig mit dem wenigstens einen Türflügel, welcher am wenigstens einen Träger anordenbar ist, verbunden oder verbindbar ist, an der wenigstens einen weiteren Führungsschiene lagerbar oder gelagert ist. Damit kann eine faltbare Tür bestehend aus zwei Türflügeln geschaffen werden. Bei breiten Türen ist dies beispielsweise vorteilhaft, da damit beim Schließen und Öffnen weniger Platz vor dem Möbel beansprucht wird.

In einem Ausführungsbeispiel der Führungsanordnung ist vorgesehen, dass die wenigstens zwei Führungssysteme wenigstens eine gemeinsame Steuervorrichtung aufweisen.

Dabei kann vorgesehen sein, dass die Stromzufuhr zu wenigstens einem elektrischen Gerät
- durch wenigstens ein Signal von wenigstens einem Führungssystem, und/oder
- durch je wenigstens ein Signal von den wenigstens zwei Führungssystemen unterbrechbar und/oder freigebbar ist.

Es kann ausreichend sein, dass nur ein Türflügel von mehreren Türflügeln in wenigstens einer vorbestimmten, insbesondere geöffneten, Stellung ist um die Stromzufuhr zu wenigstens einem elektrischen Gerät zu unterbrechen und/oder freizugeben.

Es kann gefordert werden, dass die wenigstens zwei Türflügel in wenigstens einer vorbestimmten, insbesondere geöffneten, Stellung sind um die Stromzufuhr zu wenigstens einem elektrischen Gerät zu unterbrechen und/oder freizugeben. Damit müssen die wenigstens zwei Türflügel ordnungsgemäß geöffnet werden.

In einem Ausführungsbeispiel einer Führungsanordnung werden eine faltbare Tür bestehend aus zwei Türflügeln mit einer weiteren faltbaren Tür und/oder einer nicht faltbaren Tür bestehend aus einem Türflügel kombiniert. Damit können flexibel Lösungen für verschiedene Möbel realisiert werden.

In einem Ausführungsbeispiel des Möbels ist wenigstens ein schachtförmiger Hohlraum vorgesehen, in welchem der wenigstens eine Türflügel versenkbar ist. Damit ist der Türflügel in geöffnetem Zustand aufgeräumt.

Es kann vorgesehen sein, dass die Führungsvorrichtung und andere Mechaniken aus ästhetischen Gründen im Hohlraum angeordnet sind.

Die wenigstens eine Schaltvorrichtung und/oder der wenigstens eine Sensor oder die wenigstens eine Schnittstelle kann derart relativ zum Möbelkorpus positioniert oder positionierbar sein, dass die wenigstens eine Schaltvorrichtung und/oder der wenigstens eine Sensor in einer, vorzugsweise vollständig, versenkten Stellung des wenigstens einen Türflügels im Hohlraum schaltbar und/oder auslösbar ist. Es kann beispielsweise vorgesehen sein, dass der Türflügel im Hohlraum versenkt sein muss, damit ein elektrisches Gerät Strom beziehen kann.

Weitere bevorzugte Ausführungsbeispiele sind anhand der folgenden Figuren beschrieben. Dabei zeigen:
- Fig. 1a,b: Möbel mit Führungsanordnung mit zwei Führungssystemen mit a. geschlossenen Türflügeln und b. einem geöffneten Türflügel
- Fig. 2: alternatives Ausführungsbeispiel eines Möbels mit Führungsanordnung in einer perspektivischen Hinteransicht
- Fig. 3a,b: Detailansichten der Führungsanordnung aus der Fig. 2
- Fig. 4a,b: Detailansicht der Schaltvorrichtung des Führungssystems mit a. montierter und b. nicht montierter ersten Komponente der Schaltvorrichtung
- Fig. 5: Explosionsdarstellung von Schaltvorrichtung, Montagevorrichtung und Adapter
- Fig. 6a,b: Träger in a. Gesamtansicht und b. Detailansicht der der ersten Komponente der Schaltvorrichtung am Trägerkopf
- Fig. 7a-d: Adapter in a. perspektivischer Ansicht und b. Seitenansicht und Montagevorrichtung in c. perspektivischer Ansicht und d. Seitenansicht
- Fig. 8a-d: alternatives Ausführungsbeispiels eines Adapters und einer Montagevorrichtung in den gleichen Ansichten wie in den Fig. 7a-d
- Fig. 9a,b: Schaltvorrichtung, Adapter und Montagevorrichtung im Montagezustand nach dem Ausführungsbeispiel a. aus den Fig. 8a-d und b. aus den Fig. 7a-d
- Fig. 10: Schaltvorrichtung, Adapter und Montagevorrichtung im Montagezustand ohne Seitenwände des Möbels
- Fig. 11a,b: zweite Komponente der Schaltvorrichtung, Adapter und Montagevorrichtung a. im an den Seitenwänden montierten Zustand und b. ohne Seitenwände
- Fig. 12: Explosionsdarstellung von zweiter Komponente der Schaltvorrichtung, Adapter und Montagevorrichtung
- Fig. 13a,b: alternative Ansicht von unten von Fig. 11b mit a. montierter und b. nicht montierter zweiter Komponente der Schaltvorrichtung
- Fig. 14a,b: wie Fig. 4a mit der Montagevorrichtung und dem Adapter aus Fig. 8a-d a. mit Seitenwand und b. mit ausgeblendeter Seitenwand
- Fig. 15: erste Komponente der Schaltvorrichtung außerhalb einer dafür vorgesehenen Schnittstelle mit Rastmittel
- Fig. 16a,b: erste Komponente der Schaltvorrichtung a. außerhalb und b. innerhalb einer dafür vorgesehenen Schnittstelle mit Rastmittel
- Fig. 17a,b: Schaltvorrichtung in a. zum Schalten vorbestimmter Stellung und b. anderer Stellung
- Fig. 18: Schaltvorrichtung mit gelösten Befestigungsmittel
- Fig. 19a,b: erste Komponente der Schaltvorrichtung mit in der Schnittstelle a. eingerastetem und b. nicht eingerastetem Magneten
- Fig. 20a,b: zweites Ausführungsbeispiel eines Möbels mit zweiflügliger Tür in a. Gesamtdarstellung und b. Detailansicht der Schaltvorrichtung
- Fig. 21: Schaltvorrichtung, Montagevorrichtung und Adapter in a. Explosionsdarstellung und b. montiertem Zustand
- Fig. 22a,b: Schaltvorrichtung, Montagevorrichtung und Adapter in zwei verschiedenen Ansichten
- Fig. 23a,b: Träger mit Schaltvorrichtung am Trägerkopf a. mit und b. ohne Montagevorrichtung und Adapter
- Fig. 24: Schema eines Möbels mit Steuervorrichtung, Stromquelle und Schaltvorrichtung

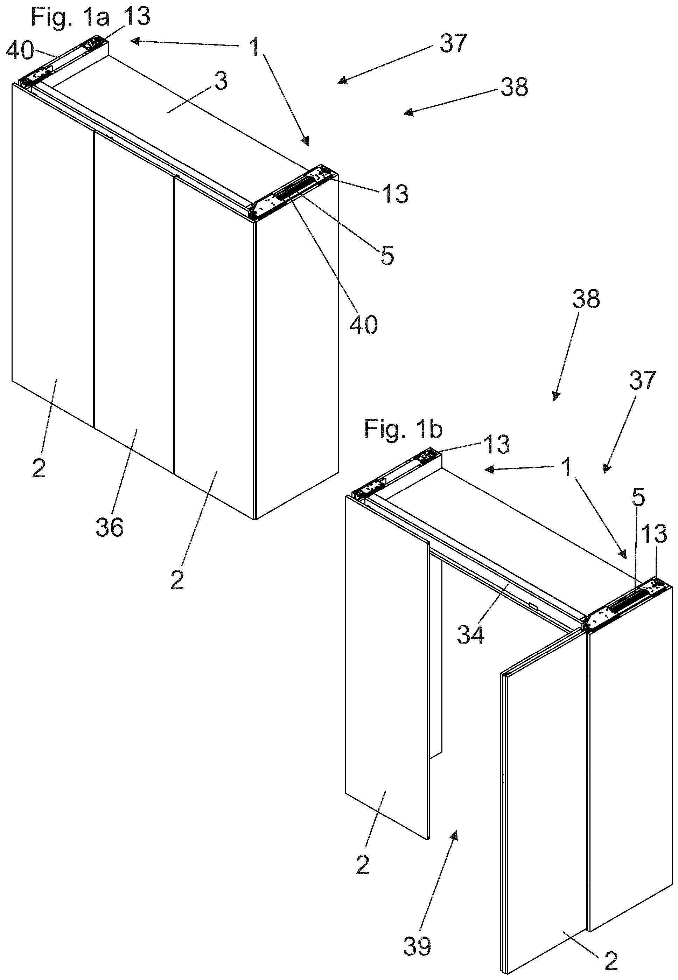

Die Fig. 1a und 1b zeigen ein Möbel 38 mit einem Möbelkorpus 3 und mit einer Führungsanordnung 37. Die Führungsanordnung 37 umfasst zwei Führungssysteme 1. Das Möbel 38 weist zwei Türen umfassend drei Türflügel 2, 36 auf. Eine erste einflüglige Tür besteht aus einem Türflügel 2 und eine zweite zweiflüglige Tür besteht aus einem Doppeltürflügel. Der Doppeltürflügel weist einen Türflügel 3 und einen weiteren Türflügel 36 auf. Der weitere Türflügel 36 ist gelenkig mit dem Türflügel 2 verbunden. An den Türflügeln 2 ist ein Träger 4 angeordnet (dieser Träger 4 ist in den Fig. 1a und 1b nicht ersichtlich).

In der Fig. 1a sind alle Türflügel 2, 36 geschlossen, während in der Fig. 1b der Doppeltürflügel geöffnet ist.

Zusätzlich zum wenigstens einen Türflügel 2 weist das Möbel 38 einen Möbelkorpus 3 auf, wobei der Möbelkorpus 3 wenigstens einen Innenraum 39 aufweist, wobei der wenigstens eine Innenraum 39 mit dem wenigstens einen Türflügel 2 zumindest bereichsweise abdeckbar ist. Im Innenraum 39 ist wenigstens ein elektrisches Gerät 11 anordenbar, wobei das elektrische Gerät 11 in der Fig. 1b nicht dargestellt ist.

In der Fig. 1b ist eine weitere Führungsschiene 34 ersichtlich, welche im Wesentlichen quer zu einer Trägerführungsschiene 5 angeordnet ist. Zudem ist wenigstens ein Laufwagen 34 vorgesehen, mit welchem ein weiterer Türflügel 36 an der wenigstens einen weiteren Führungsschiene 34 lagerbar oder gelagert ist.

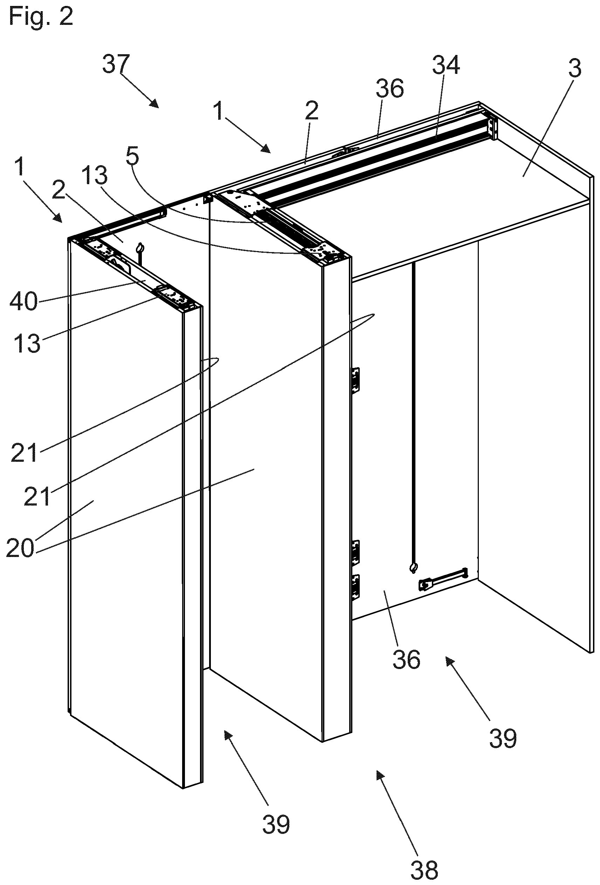

Die Fig. 2 zeigt ein alternatives Ausführungsbeispiel eines Möbels mit Führungsanordnung 37 in einer perspektivischen Hinteransicht. Dadurch sieht man in den Innenraum 39, in welchem hier weiterhin kein elektrisches Gerät 11 dargestellt ist. Wieder umfasst die Fig. 2 eine zweiflüglige Tür und eine einflüglige Tür. Die Trägerführungsschienen 5 sind jedoch nicht an den gegenüberliegenden Seiten des Möbels 38 angeordnet, wie in den Fig. 1a und 1b.

Das Möbel 38 umfasst zwei schachtförmige Hohlräume 40, in welchen die Türflügel 2, 36 versenkbar sind. Die Hohlräume werden von Seitenwänden 20, 21 begrenzt, wobei die Seitenwände 20, 21 mittels einer Montagevorrichtung 13 zusammengehalten werden. In diesen Hohlräumen 40 befinden sich die Trägerführungsschienen 5.

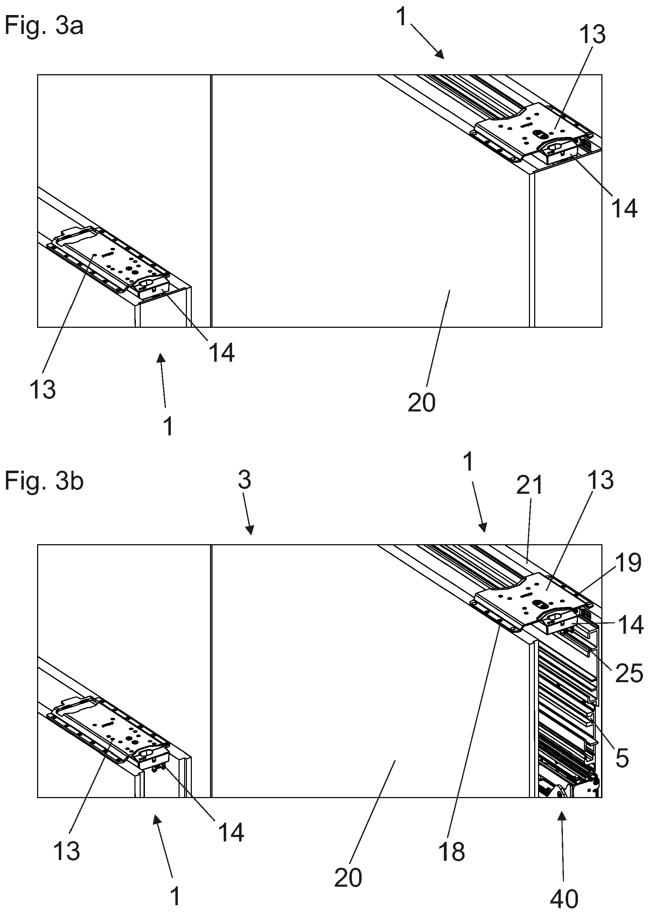

Die Fig. 3a und 3b zeigen Detailansichten der Führungsanordnung 37 aus der Fig. 2. In der Fig. 3a sind die Hohlräume 40 nach hinten abgedeckt, während in der Fig. 3b die Hohlräume 40 nach hinten offen sind.

In dem rechten Hohlraum 40 in der Fig. 3b sind Trägerführungsschienen 5 und Kopfführungsschienen 25 ersichtlich. Die Führungsschienen sind im linken Hohlraum 40 in der Fig. 3b nicht dargestellt.

Weiterhin ist ein Adapter 14, welcher an der Montagevorrichtung 13 im Hohlraum 40 angeordnet ist, ersichtlich. Wie weiter unten beschrieben, kann auf diesen Adapter 14 wenigstens eine Schaltvorrichtung 7 und/oder wenigstens ein Sensor 8 angebracht werden.

Die Montagevorrichtung 13 ist im Wesentlichen eben oder in einem Querschnitt im Wesentlichen brückenförmig ausgebildet und weist eine erste Montageschnittstelle 18 zur, vorzugsweise lösbaren, Befestigung der wenigstens einen Montagevorrichtung 13 an einer ersten Seitenwand 20 des Möbelkorpus 3 und eine zweite Montageschnittstelle 19 zur, vorzugsweise lösbaren, Befestigung der wenigstens einen Montagevorrichtung 13 an einer von der ersten Seitenwand 20 beabstandeten zweiten Seitenwand 21 des Möbelkorpus 3 auf.

Damit werden die beiden Seitenwände 20, 21 gegeneinander fixiert und der Adapter 14 kann mittig im Hohlraum 40 angebracht werden.

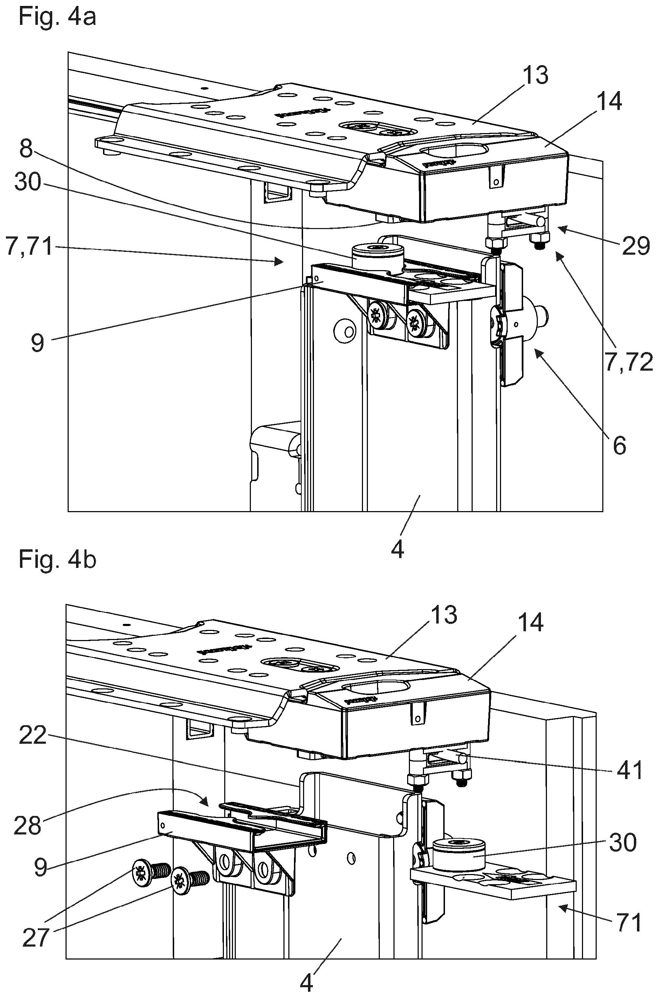

Die Ausführungsbeispiele der folgenden Figuren 4a bis 19b betreffen vorzugsweise ein Führungssystem 1 für einflüglige Türen.

Die Fig. 4a und 4b zeigen eine Detailansicht der Schaltvorrichtung 7 des Führungssystems 1, wobei in der Fig. 4a eine erste Komponente 71 der Schaltvorrichtung 7 montiert ist und in der Fig. 4b eine erste Komponente 71 der Schaltvorrichtung 7 (noch) nicht montiert ist.

Das Führungssystem 1 zur Führung wenigstens eines Türflügels 2 relativ zu einem Möbelkorpus 3 umfasst wenigstens einen Träger 4, an welchem der wenigstens eine Türflügel 2, vorzugsweise gelenkig, lagerbar ist.

Weiterhin umfasst das Führungssystem 1 eine, vorzugsweise wenigstens zwei in einer Längsrichtung des wenigstens einen Trägers 4 voneinander beabstandete Trägerführungsschiene(n) 5 (nicht dargestellt aus Übersichtlichkeitsgründen) und wenigstens eine Führungsvorrichtung 6, mit welcher der wenigstens eine Träger 4 an der wenigstens einen Trägerführungsschiene 5 verschiebbar lagerbar oder gelagert ist, vorzugsweise in eine Richtung im Wesentlichen quer zu einer Längsrichtung des wenigstens einen Trägers 4.

Der Träger 4 und damit der Türflügel 2 können somit entlang der Trägerführungsschiene 5 in den und aus dem Hohlraum 40 geschoben werden. Damit ist der (geöffnete) Türflügel 2 in dem Hohlraum 40 verstaut und stört nicht den ästhetischen Gesamteindruck des Möbels 38.

Das Führungssystem 1 kann wenigstens eine Schaltvorrichtung 7 und/oder wenigstens einen Sensor 8 oder wenigstens eine Schnittstelle 9 zur, vorzugsweise lösbaren, Befestigung der wenigstens einen Schaltvorrichtung 7 und/oder des wenigstens einen Sensors 8 umfassen.

Die wenigstens eine Schaltvorrichtung 7 und/oder der wenigstens eine Sensor 8 sind/ist dazu ausgebildet, wenigstens ein Signal 10 zu generieren, mit welchem die Stromzufuhr zu wenigstens einem elektrischen Gerät 11, vorzugsweise Küchengerät 12, unterbrechbar und/oder freigebbar ist. Beispielsweise kann ein Küchengerät nur bei geöffneter Tür betrieben werden.

Die wenigstens eine Schaltvorrichtung 7 und/oder der wenigstens eine Sensor 8 oder die wenigstens eine Schnittstelle 9 sind derart relativ zur wenigstens einen Trägerführungsschiene 5 positioniert, dass die wenigstens eine Schaltvorrichtung 7 und/oder der wenigstens eine Sensor 8 in wenigstens einer vorbestimmten Stellung des wenigstens einen Trägers 4 und damit des wenigstens einen Türflügels 2 relativ zur wenigstens einen Trägerführungsschiene 5 schaltbar und/oder auslösbar ist.

Es kann sich bei der wenigstens einen vorbestimmten Stellung um eine Endstellung des wenigstens einen Trägers 4 relativ zur wenigstens einen Trägerführungsschiene 5 handeln. In den Fig. 4a und 4b ist diese vorbestimmte Stellung eingenommen.

Damit ist die Schaltvorrichtung 7 und/oder der Sensor 8 auch derart relativ zum Möbelkorpus 3 positioniert, dass die wenigstens eine Schaltvorrichtung 7 und/oder der wenigstens eine Sensor 8 in einer, vorzugsweise vollständig, versenkten Stellung des wenigstens einen Türflügels 2 im Hohlraum 40 schaltbar und/oder auslösbar ist.

In den Fig. 4a und 4b ist die Schaltvorrichtung 7 als zwei Komponenten 71, 72 ausgeführt. Die Schaltvorrichtung weist demnach eine erste Komponente 71 und eine zweite Komponente 72 auf. Die erste Komponente 71 ist dabei bewegungsgekoppelt mit dem Träger 4 verbunden und die zweite Komponente 72 ist relativ zur wenigstens einen Trägerführungsschiene 5 ortsfest anordenbar.

Die erste Komponente 71 der Schaltvorrichtung 7 ist als Magnet 30 und die zweite Komponente 72 der Schaltvorrichtung 7 ist als Reedschalter 29 ausgebildet. Durch ein Verfahren des Trägers 4 mit dem Magnet 30 in die Nähe des Reedschalters 29 wir der Reedschalter 29 geschaltet, insbesondere wird ein Signal 10 ausgesendet, welches dann die Stromzufuhr zu den elektrischen Geräten 11 an- oder abschaltet.

Der Reedschalter 29 fungiert daher als Sensor 8 für das Magnetfeld des Magnets 30. Zum Schalten des Reedschalters 29 muss der Magnet 30 nahe genug am Reedschalter 29 angeordnet werden.

Da die Baugrößen der Schalter variieren können, ist wünschenswert, die Reedschalter 29 flexibel anordnen zu können. Die zweite Komponente 72 der Schaltvorrichtung 7 ist daher mit einem Adapter 14 an der Montagevorrichtung 13 angeordnet. Mittels des Adapter 14 kann die zweite Komponente 72 der Schaltvorrichtung 7 in wenigstens zwei unterschiedlichen Abständen relativ zur wenigstens einen Montagevorrichtung 13 montiert werden.

In den Fig. 4a und 4b ist eine Schnittstelle 9 zur Montage der ersten Komponente 71 der Schaltvorrichtung 7 am, in Längsrichtung des Trägers 4 in einem Endbereich angeordneten, Trägerkopf 22 ersichtlich. Der Magnet 30 kann über Rastmittel 28 mittels einer Montagebewegung im Wesentlichen quer zur Längsrichtung des wenigstens einen Trägers 4 an der Schnittstelle 9 befestigt werden.

Die Schnittstelle 9 ist über Befestigungsmittel 26, vorzugsweise lösbar, am Trägerkopf 22 befestigbar. Bei dem Befestigungsmittel 26 handelt es sich im vorliegenden Ausführungsbeispiel um Schrauben 27.

Die Fig. 4b zeigt dabei die Schnittstelle 9, Befestigungsmittel 26 und die erste Komponente 71 der Schaltvorrichtung 7 in Explosionsdarstellung.

Es sei hier angemerkt, dass es auch denkbar ist, dass die Schaltvorrichtung 7 als Lichtschranke ausgebildet ist, vorzugsweise wobei der wenigstens eine Sensor 8 als Lichtsensor ausgebildet ist.

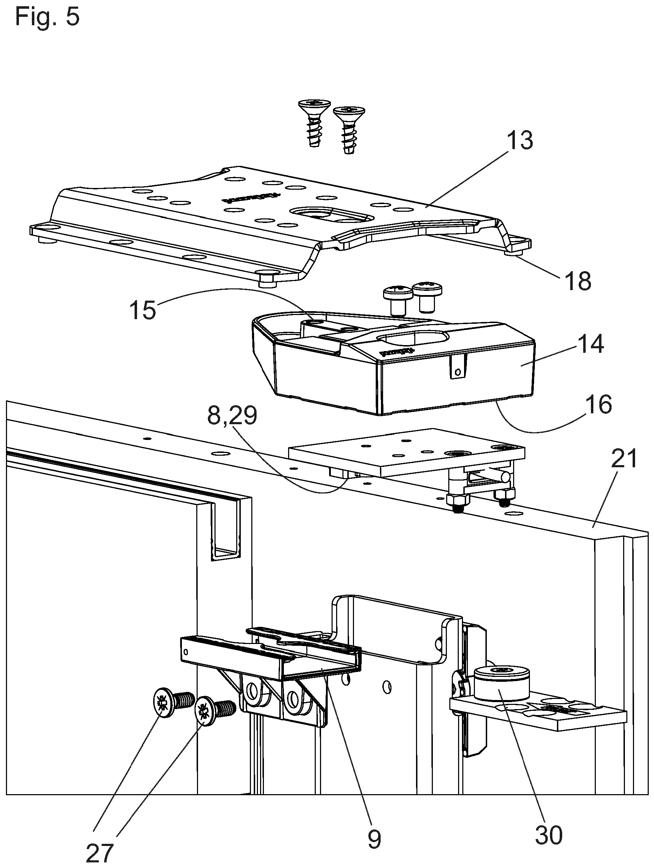

Die Fig. 5 zeigt eine Explosionsdarstellung der in den Fig. 4a und 4b beschriebenen Anordnung.

Hier ist ersichtlich, dass der Adapter 14 wenigstens eine erste Befestigungsschnittstelle 15 zur, vorzugsweise lösbaren, Befestigung des Adapters 14 an der Montagevorrichtung 13 und eine davon in einer Höhenrichtung des Adapters 14 beabstandete zweite Befestigungsschnittstelle 16 zur, vorzugsweise lösbaren, Befestigung der zweiten Komponente 72 der Schaltvorrichtung 7 aufweist.

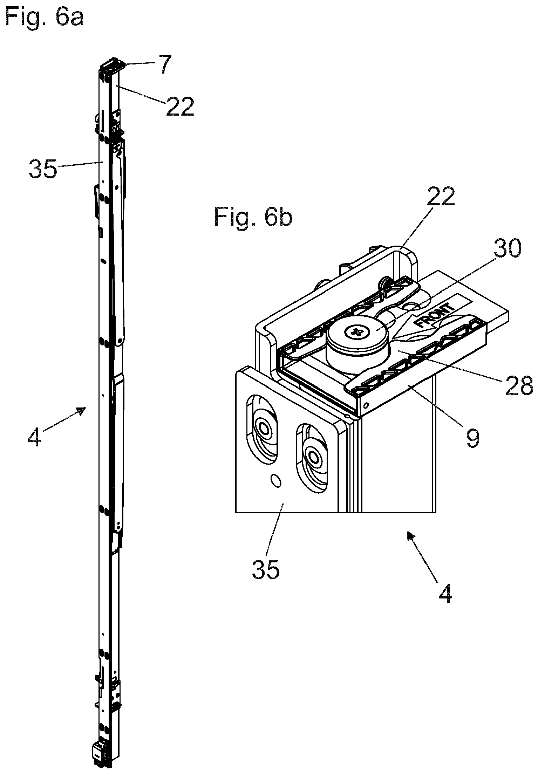

Die Fig. 6a zeigt einen Träger 4 in einer Gesamtansicht. Der Träger 4 umfasst eine Scharnierleiste 35, mit welcher der Träger 4, vorzugsweise gelenkig, an einem Türflügel 2 befestigbar ist. Der Trägerkopf 22 ist in Längsrichtung des Trägers 4 in einem Endbereich angeordnet. Am Trägerkopf 22 ist die Schaltvorrichtung 7, insbesondere die erste Komponente 71 der Schaltvorrichtung, angeordnet.

Die Fig. 6b zeigt eine Detailansicht der Fig. 6a. Es ist die erste Komponente 71 der Schaltvorrichtung 7 am Trägerkopf 22 ersichtlich. Diese ist gleich wie in den vorherigen Figuren ausgeführt: Sie weist eine Schnittstelle 9 zur Montage am Trägerkopf 22 mittels Schrauben 27 auf. Der Magnet 30 kann mittels Rastmittel 28 an der Schnittstelle befestig werden.

Der Trägerkopf 22 ist mittels Schrauben an der Scharnierleiste 35 befestigt, wobei die Schrauben 35 durch Langlöcher in der Scharnierleiste 35 ragen. Durch die Verwendung von Langlöchern kann die Höhenposition des Trägerkopfs 22 gegenüber dem Türflügel 22 bedingt eingestellt werden.

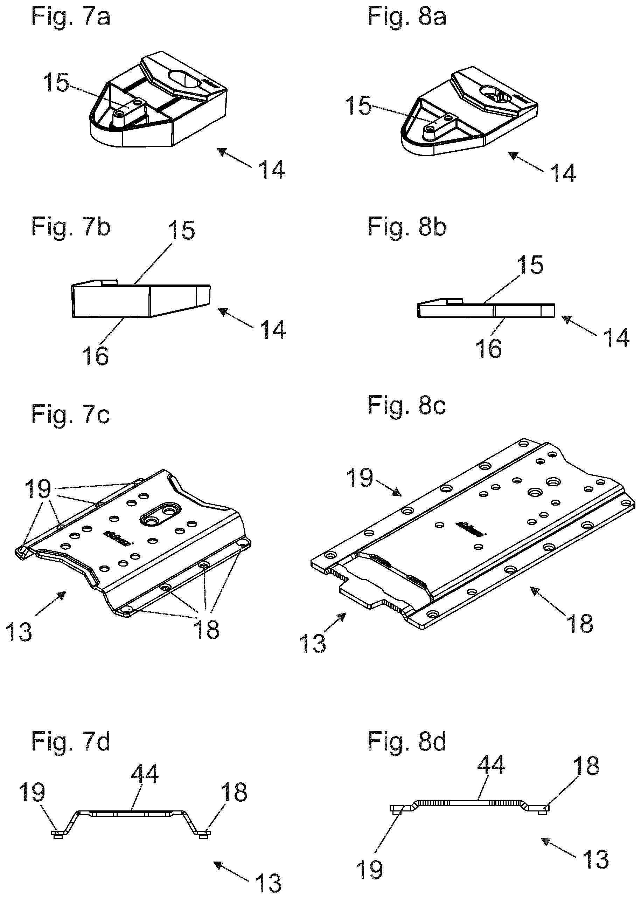

Die Fig. 7a und 7b zeigen einen Adapter 14 in perspektivischer Ansicht beziehungsweise Seitenansicht. Die Fig. 8a und 8b zeigen ein alternatives Ausführungsbeispiel eines Adapters 14.

Insbesondere aus den Fig. 7b und 8b ist ersichtlich, dass die beiden Befestigungsschnittstellen 15, 16 der beiden Adapter 14 in Höhenrichtung unterschiedlich weit voneinander beabstandet sind.

Die Fig. 7c und 7d zeigen eine Montagevorrichtung 13 in perspektivischer Ansicht beziehungsweise Seitenansicht. Die Fig. 8a und 8b zeigen ein alternatives Ausführungsbeispiel einer Montagevorrichtung 13.

Insbesondere aus den Fig. 7d und 8d ist ersichtlich, dass der Brückenteil 44 der Montagevorrichtungen 13 in Höhenrichtung unterschiedlich weit von den Montageschnittstellen 18, 19 beabstandet sind. In anderen Worten: Die Biegung der Brückenteile 44 der beiden Montagevorrichtungen 13 ist unterschiedlich stark ausprägt.

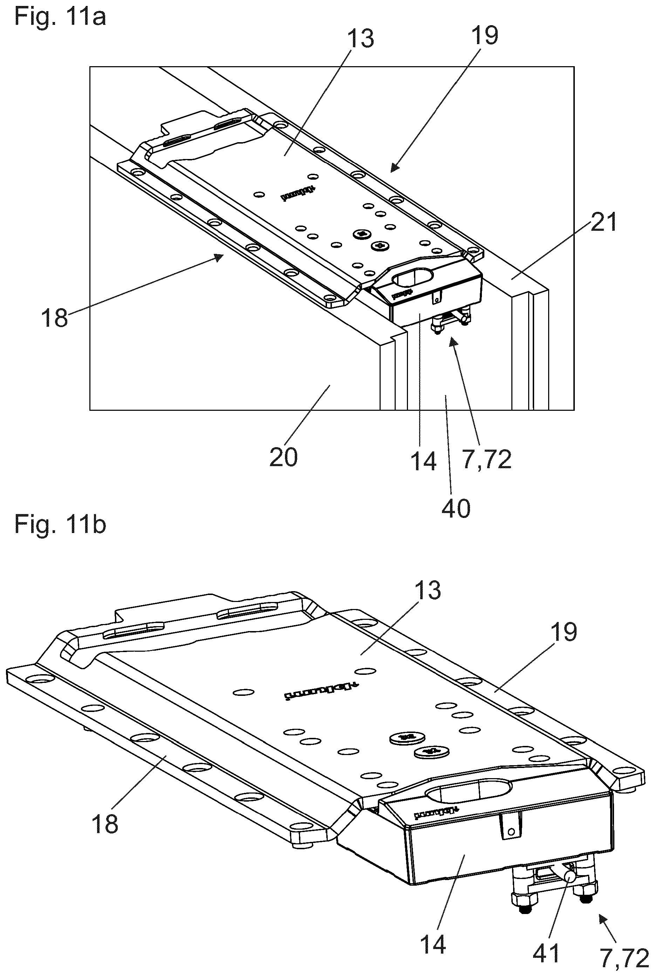

Es sei hier angemerkt, dass die Montagevorrichtung 13 aus den Fig. 7c und 7d im Wesentlichen den Ausführungsbeispielen in den Fig. 4a, 4b und 5 entspricht, während die Montagevorrichtung 13 aus den Fig. 8c und 8d im Wesentlichen den Ausführungsbeispielen in den Fig. 11a bis 14b und den Fig. 16a bis 18 entspricht.

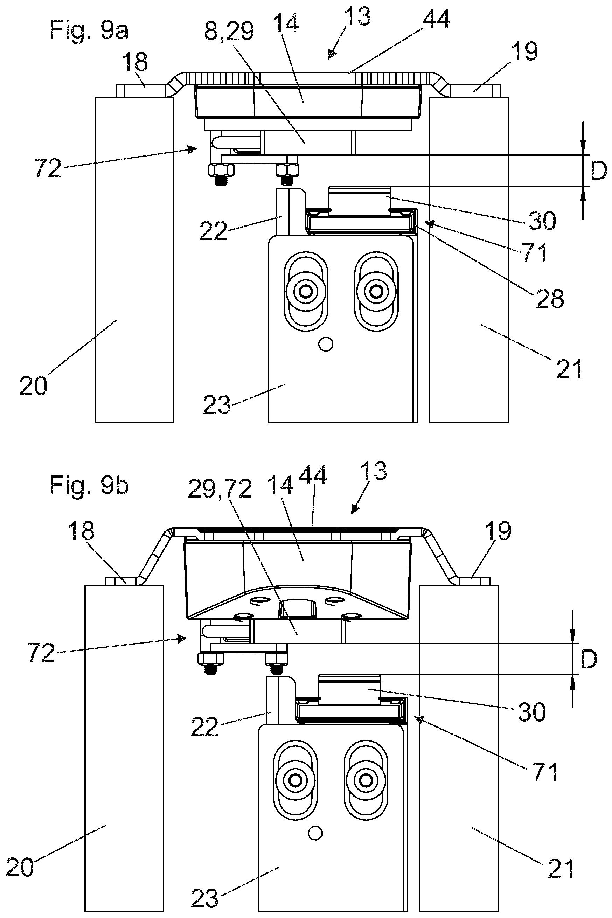

Die Fig. 9a zeigt eine Schaltvorrichtung 7, einen Adapter 14 und eine Montagevorrichtung 13 im Montagezustand, wobei der Adapter 14 und die Montagevorrichtung 13 nach dem Ausführungsbeispiel aus den Fig. 8a-d ausgeführt ist.

Die Fig. 9b zeigt eine Schaltvorrichtung 7, einen Adapter 14 und eine Montagevorrichtung 13 im Montagezustand, wobei der Adapter 14 und die Montagevorrichtung 13 nach dem Ausführungsbeispiel aus den Fig. 7a-d ausgeführt ist.

Der Abstand D zwischen den beiden Komponenten 71, 72 der Schaltvorrichtung 7 ist trotz der unterschiedlichen Ausführung der Montagevorrichtung 13 in den Fig. 9a und 9b gleich. Für ein gutes Funktionieren des Schaltens der Schaltvorrichtung 7 ist dies wünschenswert, da mit dem Abstand zwischen dem Magneten 30 der ersten Komponente 71 der Schaltvorrichtung 7 und dem Reedschalter 29 der zweiten Komponente 72 der Schaltvorrichtung 7 eine optimale Stärke des Magnetfelds zum Schalten des Reedschalters 29 erreicht wird.

Der gleiche Abstand D in Fig. 9a und 9b wird durch die Verwendung von zwei verschiedenen Adaptern 14 erreicht. Es wird durch die Wahl aus einer Gruppe von wenigstens zwei Adaptern 14, deren beide Befestigungsschnittstellen 15, 16 in Höhenrichtung unterschiedlich weit voneinander beabstandet sind, der unterschiedliche Abstand zwischen dem Brückenteil 44 und den Montageschnittstellen 18, 19 der Montagevorrichtung 13 in Höhenrichtung ausgeglichen.

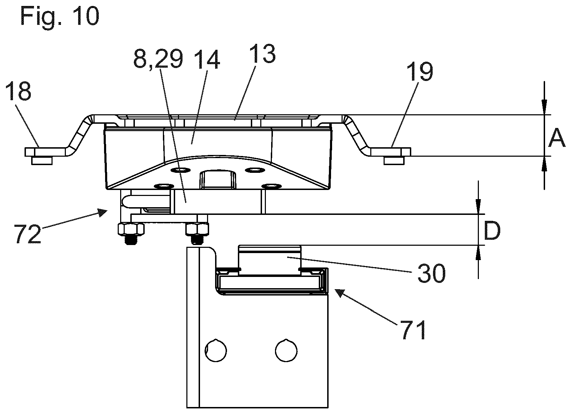

Der Abstand zwischen dem Brückenteil 44 und den Montageschnittstellen 18, 19 der Montagevorrichtung 13 in Höhenrichtung ist in Fig. 10 ersichtlich und mit A bezeichnet. Hieraus ist gut ersichtlich, wie der Abstand D durch die Wahl des Adapters 14 konstant gehalten werden kann.

Es sei hier angemerkt, dass der Adapter 14 eine Einstellvorrichtung 17 aufweisen kann, mit welcher eine Lage der beiden Befestigungsschnittstellen 15, 16 relativ zueinander in Höhenrichtung einstellbar ist. Damit müsste man nicht zwischen mehreren nicht einstellbaren Adaptern 14 wählen.

Die folgenden Fig. 11a bis 19b zeigen ein weiteres Ausführungsbeispiel eines Führungssystems 1, insbesondere für einflüglige Türen.

Die Fig. 11a zeigt die zweite Komponente 72 der Schaltvorrichtung 7, einen Adapter 14 und eine Montagevorrichtung 13 im an den Seitenwänden 20, 21 montierten Zustand. Durch die Montage der zweiten Komponente 72 an der Montagevorrichtung 13 und dem Adapter 14 ist die zweite Komponente 72 in dem Hohlraum 40 zwischen den beiden Seitenwänden 20, 21 angeordnet.

Die Fig. 11b zeigt eine ähnliche Ansicht wie die Fig. 11a ohne Seitenwände 20, 21. Ersichtlich ist hier das Kabel 41, welches von der Schaltvorrichtung 7 wegführt. Über dieses Kabel 41 können Signale 10 übersendet werden, welche veranlassen, dass die Stromzufuhr zu einem elektrischen Gerät 11 abgeschaltet wird.

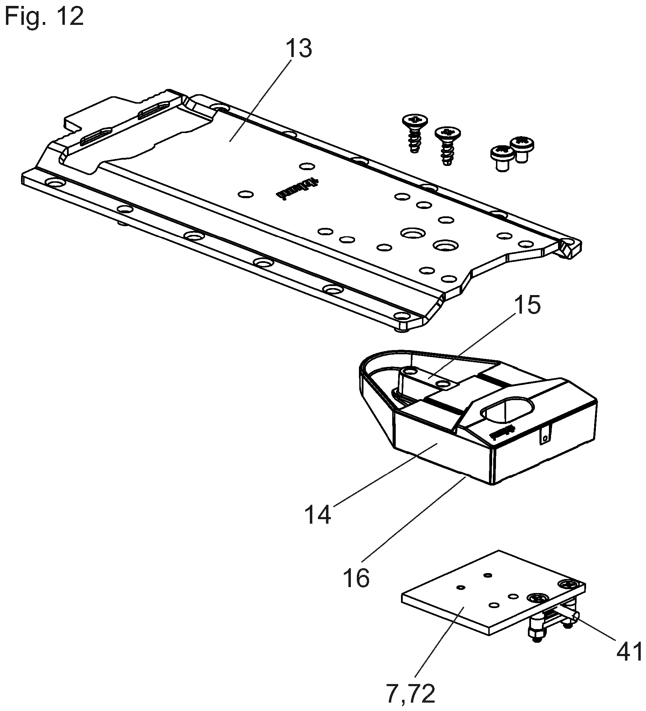

Die Fig. 12 zeigt eine Explosionsdarstellung von der zweiten Komponente 72 der Schaltvorrichtung 7, Adapter 14 und Montagevorrichtung 13.

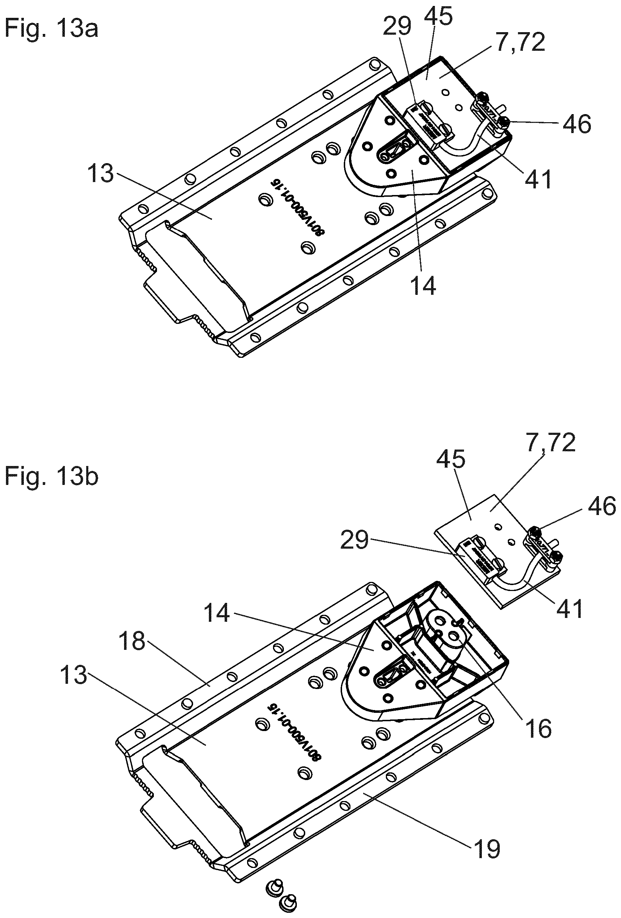

Die Fig. 13a zeigt eine alternative Ansicht von unten der Fig. 11b. Hier ist ersichtlich, dass die zweite Komponente 72 der Schaltvorrichtung 7 eine Befestigungsplatte 45, eine Kabelhalterung 46 zum Halten des Kabels 42 und einen Reedschalter 29 aufweist. Der Reedschalter 29 beinhaltet einen Sensor 8 zur Erfühlung eines Magnetfelds.

Die Fig. 13b zeigt die gleiche Ansicht wie die Fig. 13a mit abgenommener zweiter Komponente 72 der Schaltvorrichtung 7. Dadurch wird die zweite Befestigungsschnittstelle 16 des Adapters 14 ersichtlich.

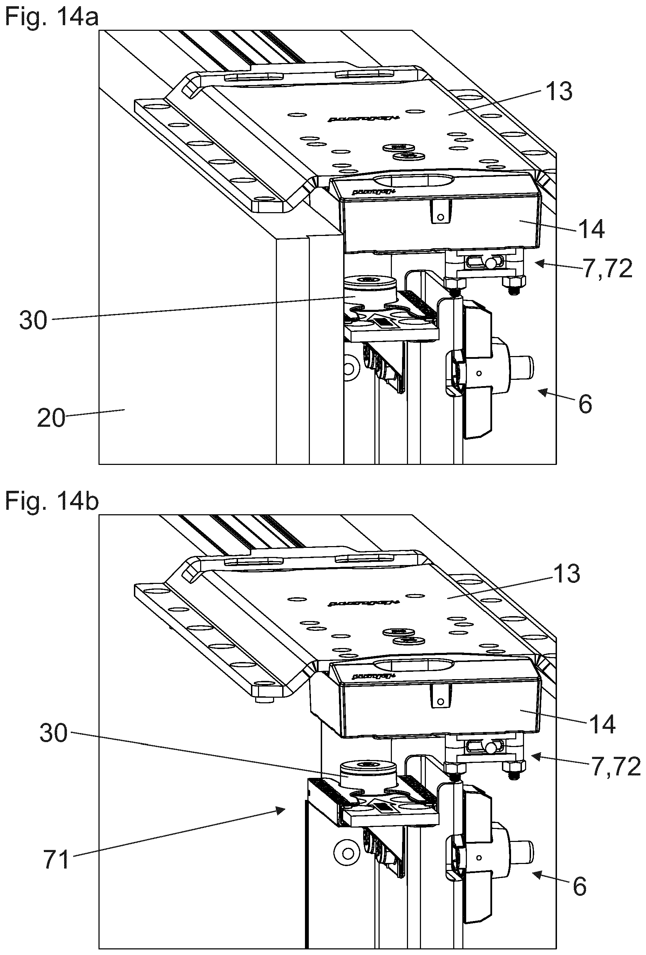

Die Fig. 14a ist wie die Fig. 4a, wobei statt der Montagevorrichtung 13 und dem Adapter 14 aus den Fig. 7a-d, jene aus den Fig. 8a-d dargestellt sind. Wieder ist die Führungsvorrichtung 6 ersichtlich. Die Fig. 14b zeigt die gleiche Ansicht wie die Fig. 14a, allerdings mit ausgeblendeter Seitenwand 20.

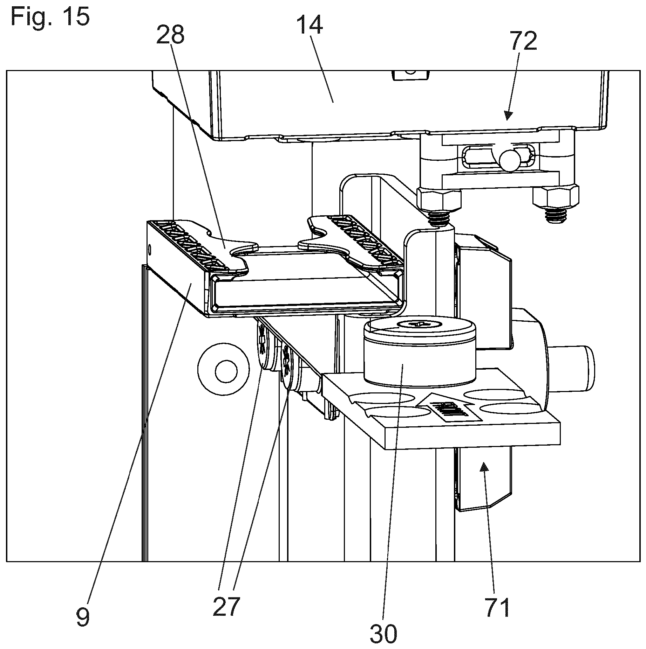

Die Fig. 15 zeigt eine Detailansicht der Schaltvorrichtung 7. Die erste Komponente 71 der Schaltvorrichtung 7 mit Magnet 30 ist außerhalb einer dafür vorgesehenen Schnittstelle 9 mit Rastmittel 28 angeordnet. Die Schnittstelle 9 ist wiederrum mit Schrauben 27 am Trägerkopf 22 befestigt.

Die erste Komponente 71 der Schaltvorrichtung 7 kann manuell und werkzeuglos in die Schnittstelle 9 geschoben werden, wobei sie in der Schnittstelle 9 mittels Rastmittel 28 befestigt wird.

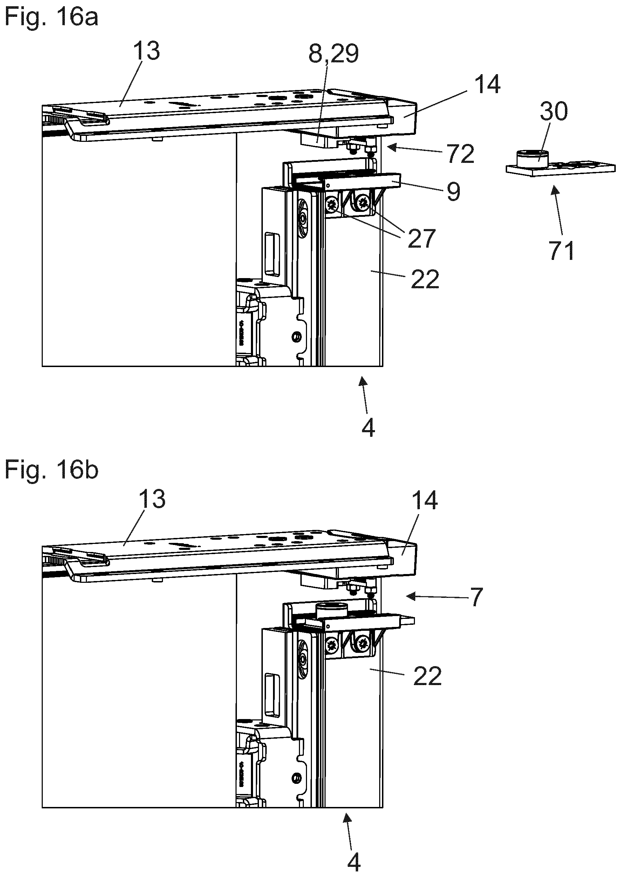

Die Fig. 16a zeigt eine andere Ansicht der Anordnung in der Fig. 15. In der Fig. 16b ist die erste Komponente 71 der Schaltvorrichtung 7 bereits in der Schnittstelle 9 angeordnet.

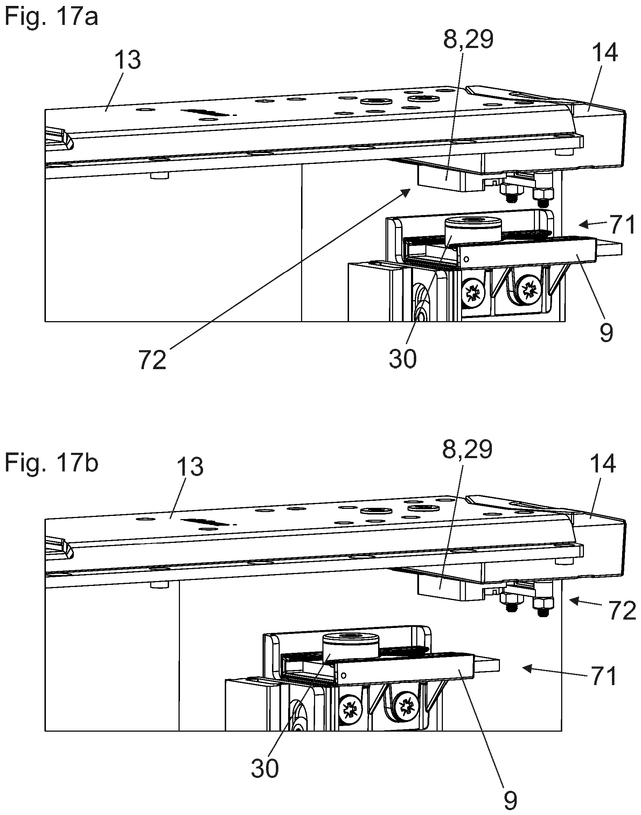

Die Fig. 17a und 17b zeigen zwei verschiedene Stellungen des Trägers 4 mit der darauf angeordneten ersten Komponente 71 der Schaltvorrichtung 7.

In der Fig. 17a ist der Träger 4 in einer vorbestimmten Stellung, in welcher die Schaltvorrichtung 7 ausgelöst wird. Dazu muss der Magnet 30 in der Nähe des Sensors 8 des Reedschalters 29 angeordnet sein. Vorzugsweise entspricht die vorbestimmte Stellung einer Endstellung des Trägers 4 relativ zur Trägerführungsschiene 5. **In** einer solchen Stellung kann der Türflügel 2 vollständig in den Hohlraum 40 eingeschoben sein. Zudem ist vorgesehen, dass bei dieser vorbestimmten Stellung des Trägers 4, also bei geschlossenem Kontakt des Reedschalters 29, die Stromzufuhr für elektrische Geräte 11 freigegeben wird.

In der Fig. 17b ist der Träger 4 in einer anderen Stellung. In dieser Stellung ist der Magnet 30 nicht in der Nähe des Sensors 8 des Reedschalters 29 angeordnet. Der elektrische Kontakt im Reedschalter 29 ist demnach hier nicht geschlossen. Die Stromzufuhr für elektrische Geräte 11 ist abgeschaltet.

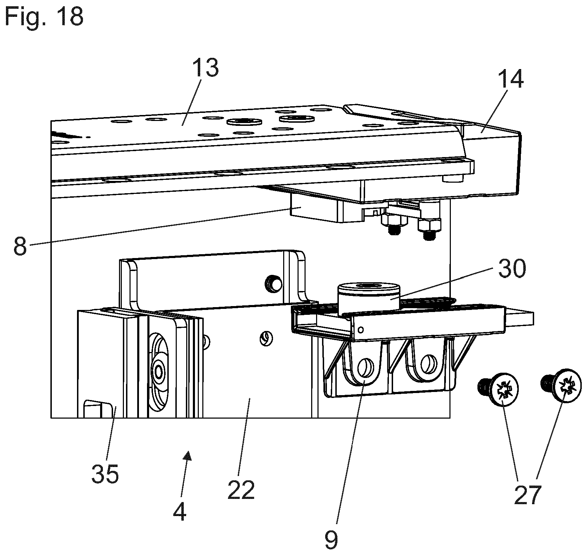

Die Fig. 18 die Schaltvorrichtung 7 mit gelösten Befestigungsmittel 27 der Schnittstelle 9.

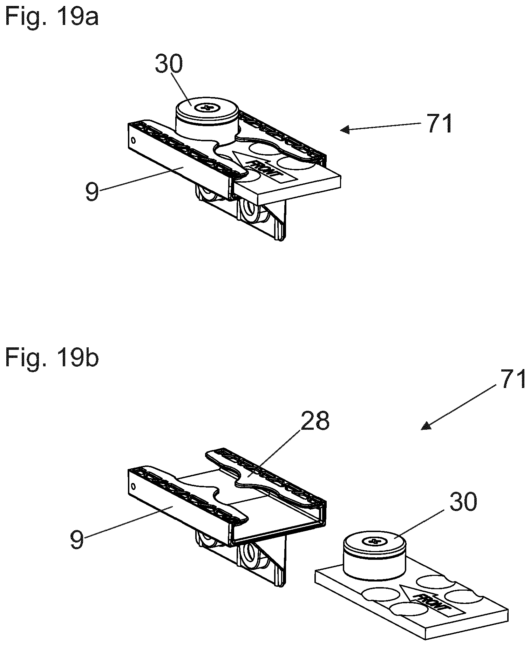

Die Fig. 19a und 19b zeigen die erste Komponente 71 der Schaltvorrichtung 7 mit in dem Rastmittel 28 der Schnittstelle 9 eingerastetem und nicht eingerastetem Magneten 30. Im Gegensatz zu den Fig. 16a und 16b ist hier die erste Komponente 71 der Schaltvorrichtung 7 in Isolation gezeigt.

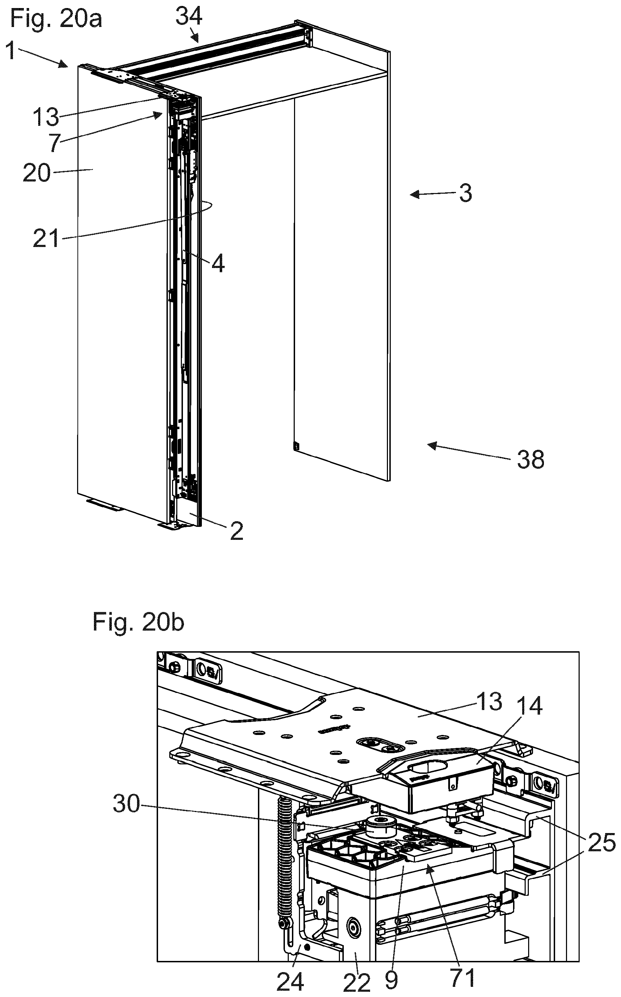

Die Ausführungsbeispiele der folgenden Figuren 20a bis 23b betreffen vorzugsweise ein Führungssystem 1 für zweiflüglige Türen mit zwei Türflügeln 2, 36.

Die Fig. 20a zeigt ein weiteres Ausführungsbeispiel eines Möbels 38 mit zweiflügliger Tür, bestehend aus zwei Türflügeln 2, 36. Hier sind die Türflügel 2, 36 im Hohlraum 40 zwischen zwei Seitenwänden 20, 21 angeordnet. Ersichtlich ist auch der Träger 4, welcher am Türflügel 2 angeordnet ist.

Der wenigstens eine Träger 4 weist einen in Längsrichtung des Trägers 4 in einem Endbereich angeordneten Trägerkopf 22 auf, wobei die wenigstens eine Schaltvorrichtung 7 und/oder der wenigstens eine Sensor 8 oder zumindest eine Komponente 71, 72 der wenigstens einen Schaltvorrichtung 7 und/oder des wenigstens einen Sensors 8 am Trägerkopf 22 angeordnet oder anordenbar ist.

Die Fig. 20b zeigt eine Detailansicht der Schaltvorrichtung 7. Die Schnittstelle 9 für den Magneten 30 weist hier eine wabenförmige Struktur auf. Der Magnet 30 wird, über seine Befestigungsplatte, an der Schnittstelle 9 angeschraubt.

Der Trägerkopf 22 ist an wenigstens einer Kopfführungsschiene 25 verschiebbar gelagert oder lagerbar, wobei die wenigstens eine Kopfführungsschiene 25 parallel zur wenigstens einen Trägerführungsschiene 5 angeordnet oder anordenbar ist.

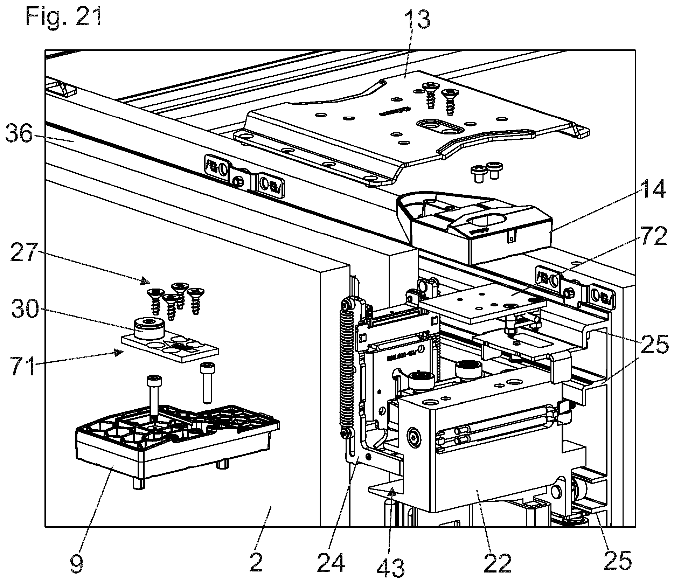

Die Fig. 21 zeigt eine Schaltvorrichtung 7, eine Montagevorrichtung 13 und einen Adapter 14 in Explosionsdarstellung.

Der Trägerkopf 22 weist wenigstens eine Parkposition 43 für wenigstens einen mit wenigstens einem Türflügel 36 verbindbaren Laufwagen 24 auf. Nach dem Hinausschieben des Laufwagens 24 (und des Türflügels 36) aus dem Hohlraum 40 kann der Laufwagen 24, in eine weitere Führungsschiene 34, welche quer zur Trägerführungsschiene 5 verläuft, einfahren. Damit kann die zweiflüglige Tür kontrolliert aufgefaltet werden.

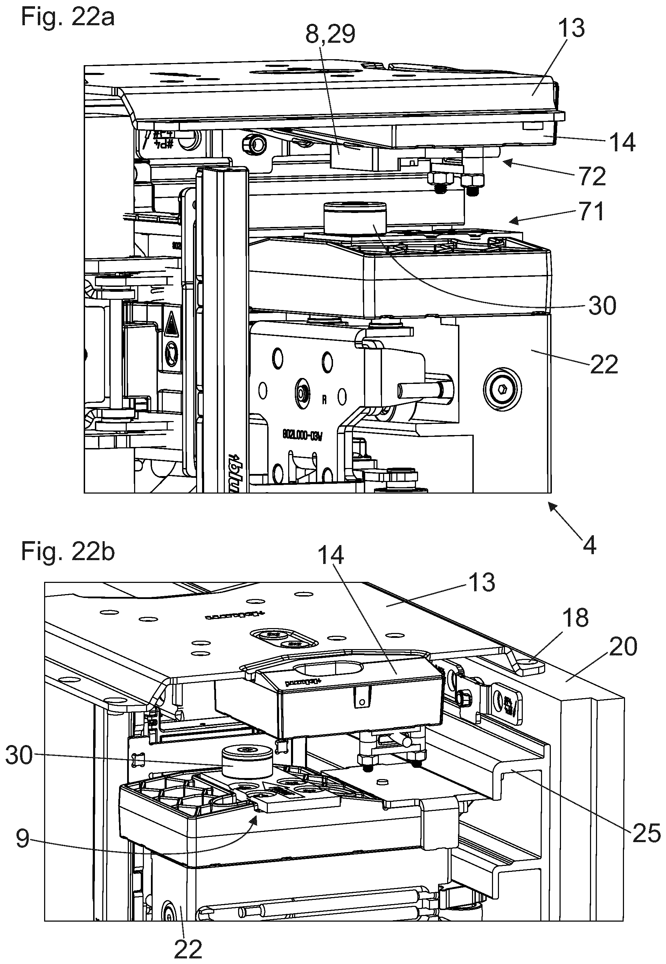

Die Fig. 22a und 22b zeigen die Schaltvorrichtung 7, die Montagevorrichtung 13 und den Adapter 14 in zwei verschiedenen Ansichten.

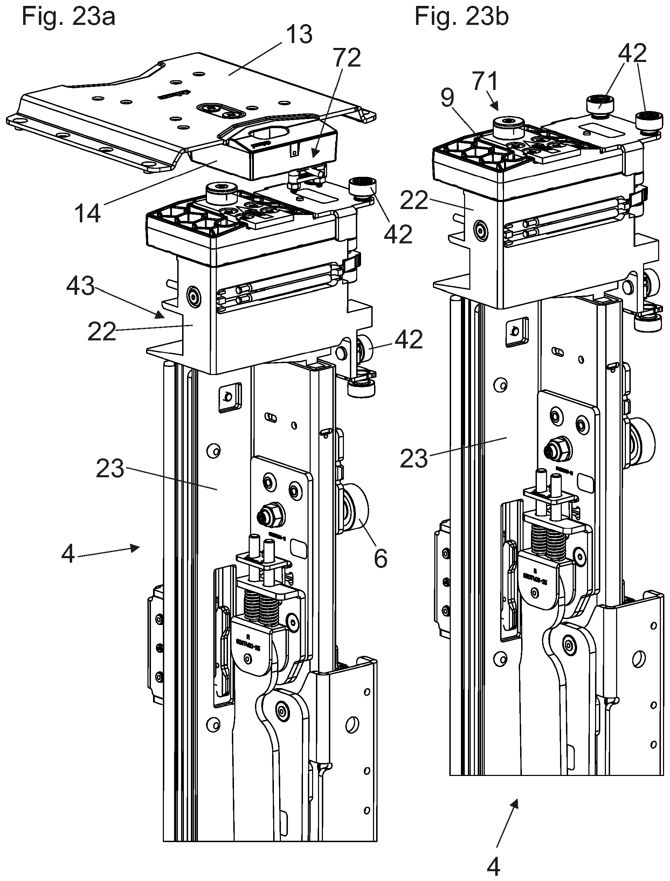

Die Fig. 23a und Fig. 23b zeigen einen Träger 4 mit Schaltvorrichtung 7 am Trägerkopf 22. In der Fig. 23a ist die Montagevorrichtung 13 mit der zweiten Komponente 72 der Schaltvorrichtung 7 dargestellt, während sie in der Fig. 23b nicht dargestellt ist.

Der Trägerkopf 22 ist zumindest in Längsrichtung des wenigstens einen Trägers 4 relativ zu einem Grundkörper 23 des wenigstens einen Trägers 4, vorzugsweise begrenzt, verschiebbar gelagert.

Der Träger 4 kann mit wenigstens einer Führungsvorrichtung 6 in den Trägerführungsschienen 5 und mit wenigstens einer Kopfführungsvorrichtung 42 in den Kopfführungsschienen 25 verschiebbar gelagert werden.

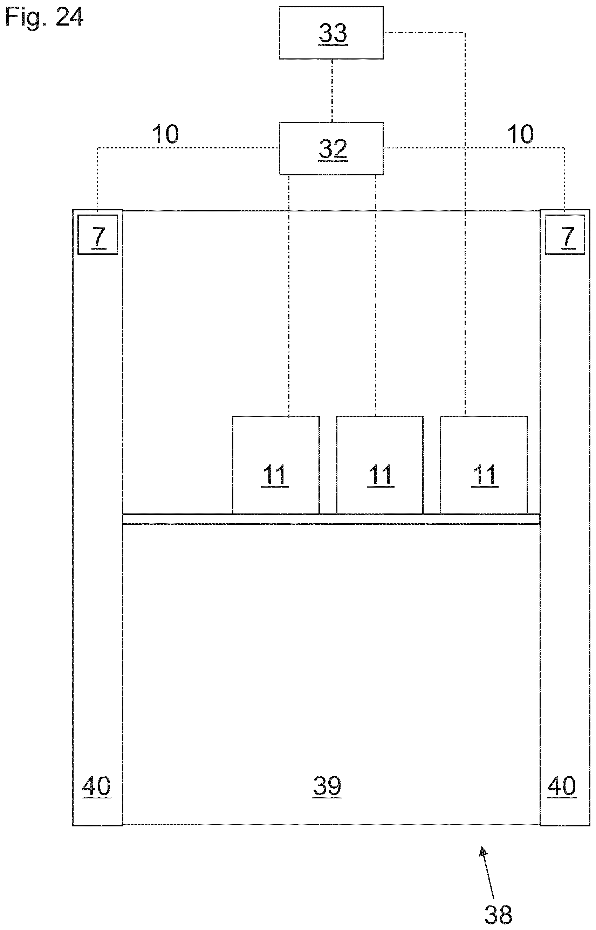

Die Fig. 24 zeigt ein Schema eines Möbels 38 mit Steuervorrichtung 32, Stromquelle 33 und zwei Schaltvorrichtungen 7.

Die Steuervorrichtung 32 ist mit der wenigstens einen Schaltvorrichtung 7 und/oder dem wenigstens einen Sensor 8, dem wenigstens einen elektrischen Gerät 11 und wenigstens einer Stromquelle 33 verbindbar.

Die von den Schaltvorrichtungen 7 generierten Signale 10 werden an die Steuervorrichtung 32 weitergeleitet. Die Steuervorrichtung 32 entscheidet aufgrund der Signale 10, ob die Stromquelle 33 Strom an die elektrischen Geräte 11 liefern soll.

In dem vorliegenden Ausführungsbeispiel sind zwei Führungssysteme 1 mit wenigstens einer gemeinsamen Steuervorrichtung 32 vorgesehen, vorzugsweise wobei die Stromzufuhr zu wenigstens einem elektrischen Gerät 11 durch wenigstens ein Signal 10 von wenigstens einem Führungssystem 1 (mit wenigstens einer Schaltvorrichtung 7) und/oder durch je wenigstens ein Signal 10 von den wenigstens zwei Führungssystemen 1 (mit deren wenigstens zwei Schaltvorrichtungen 7) unterbrechbar und/oder freigebbar ist.

Eines der elektrischen Geräte 11 in der Fig. 24 wird direkt von der Stromquelle 33 angesteuert und demnach nicht von der Steuervorrichtung 32 gesteuert und/oder nicht von den Schaltvorrichtungen 7 geschaltet. Kühlschränke sollten beispielsweise durch das Schließen der Türen nicht abgeschaltet werden.

### Bezugszeichenliste:

- 1: Führungssystem
- 2: Türflügel
- 3: Möbelkorpus
- 4: Träger
- 5: Trägerführungsschiene
- 6: Führungsvorrichtung
- 7: Schaltvorrichtung
71 erste Komponente der Schaltvorrichtung
72 zweite Komponente der Schaltvorrichtung
- 8: Sensor
- 9: Schnittstelle
- 10: Signal
- 11: elektrisches Gerät
- 12: Küchengerät
- 13: Montagevorrichtung
- 14: Adapter
- 15: erste Befestigungsschnittstelle
- 16: zweite Befestigungsschnittstelle
- 17: Einstellvorrichtung
- 18: erste Montageschnittstelle
- 19: zweite Montageschnittstelle
- 20: erste Seitenwand
- 21: zweite Seitenwand
- 22: Trägerkopf
- 23: Grundkörper
- 24: Laufwagen
- 25: Kopfführungsschiene
- 26: Befestigungsmittel
- 27: Schraube
- 28: Rastmittel
- 29: Reedschalter
- 30: Magnet
- 32: Steuervorrichtung
- 33: Stromquelle
- 34: weitere Führungsschiene
- 35: Scharnierleiste
- 36: weiterer Türflügel
- 37: Führungsanordnung
- 38: Möbel
- 39: Innenraum des Möbels
- 40: Hohlraum
- 41: Kabel
- 42: Kopfführungsvorrichtung
- 43: Parkposition
- 44: Brückenteil
- 45: Befestigungsplatte
- 46: Kabelhalterung

## Patentansprüche

1. Führungssystem (1) zur Führung wenigstens eines Türflügels (2) relativ zu einem Möbelkorpus (3), umfassend wenigstens einen Träger (4), an welchem der wenigstens eine Türflügel (2), vorzugsweise gelenkig, lagerbar ist, wenigstens eine, vorzugsweise wenigstens zwei, in einer Längsrichtung des wenigstens einen Trägers (4) voneinander beabstandete Trägerführungsschiene(n) (5) und wenigstens eine Führungsvorrichtung (6), mit welcher der wenigstens eine Träger (4) an der wenigstens einen Trägerführungsschiene (5) verschiebbar lagerbar oder gelagert ist, vorzugsweise in eine Richtung im Wesentlichen quer zu einer Längsrichtung des wenigstens einen Trägers (4), wobei das Führungssystem (1) wenigstens eine Schaltvorrichtung (7) und/oder wenigstens einen Sensor (8) und vorzugsweise wenigstens eine Schnittstelle (9) zur, vorzugsweise lösbaren, Befestigung der wenigstens einen Schaltvorrichtung (7) und/oder des wenigstens einen Sensors (8) umfasst, wobei die wenigstens eine Schaltvorrichtung (7) und/oder der wenigstens eine Sensor (8) dazu ausgebildet sind/ist, wenigstens ein Signal (10) zu generieren, mit welchem die Stromzufuhr zu wenigstens einem elektrischen Gerät (11), vorzugsweise Küchengerät (12), unterbrechbar und/oder freigebbar ist, wobei die wenigstens eine Schaltvorrichtung (7) und/oder der wenigstens eine Sensor (8) und vorzugsweise die wenigstens eine Schnittstelle (9) derart relativ zur wenigstens einen Trägerführungsschiene (5) positioniert oder positionierbar ist, dass die wenigstens eine Schaltvorrichtung (7) und/oder der wenigstens eine Sensor (8) in wenigstens einer vorbestimmten Stellung des wenigstens einen Trägers (4) und damit des wenigstens einen Türflügels (2) relativ zur wenigstens einen Trägerführungsschiene (5) schaltbar und/oder auslösbar ist, vorzugsweise wobei es sich bei der wenigstens einen vorbestimmten Stellung um eine Endstellung des wenigstens einen Trägers (4) relativ zur wenigstens einen Trägerführungsschiene (5) handelt, **dadurch gekennzeichnet, dass** wenigstens eine Montagevorrichtung (13) vorgesehen ist, an welcher die wenigstens eine Schaltvorrichtung (7) und/oder der wenigstens eine Sensor (8) oder zumindest eine Komponente (71, 72) der wenigstens einen Schaltvorrichtung (7) und/oder des wenigstens einen Sensors (8) ortsfest relativ zur wenigstens einen Trägerführungsschiene (5) montierbar ist, wobei wenigstens ein Adapter (14) vorgesehen ist, mit welchem die wenigstens eine Schaltvorrichtung (7) und/oder der wenigstens eine Sensor (8) oder die zumindest eine Komponente (71, 72) der wenigstens einen Schaltvorrichtung (7) in wenigstens zwei unterschiedlichen Abständen relativ zur wenigstens einen Montagevorrichtung (13) montierbar ist, wodurch die wenigstens eine Schaltvorrichtung (7) und/oder der wenigstens eine Sensor (8) oder die zumindest eine Komponente (71, 72) der wenigstens einen Schaltvorrichtung (7) wie gewünscht positioniert werden kann.

2. Führungssystem (1) nach Anspruch 1, wobei der wenigstens eine Adapter (14) wenigstens eine erste Befestigungsschnittstelle (15) zur, vorzugsweise lösbaren, Befestigung des wenigstens einen Adapters (14) an der wenigstens einen Montagevorrichtung (13) und wenigstens eine davon in einer Höhenrichtung des wenigstens einen Adapters (14) beabstandete zweite Befestigungsschnittstelle (16) zur, vorzugsweise lösbaren, Befestigung der wenigstens einen Schaltvorrichtung (7) und/oder des wenigstens einen Sensors (8) oder der zumindest einen Komponente (71, 72) der wenigstens einen Schaltvorrichtung (7) und/oder des wenigstens einen Sensors (8) aufweist, vorzugsweise wobei
- der wenigstens eine Adapter (14) ausgewählt ist aus einer Gruppe von wenigstens zwei Adaptern (14), deren beide Befestigungsschnittstellen (15, 16) in Höhenrichtung unterschiedlich weit voneinander beabstandet sind, und/oder
- der wenigstens eine Adapter (14) wenigstens eine Einstellvorrichtung (17) aufweist, mit welcher eine Lage der beiden Befestigungsschnittstellen (15, 16) relativ zueinander in Höhenrichtung einstellbar ist.

3. Führungssystem (1) nach Anspruch 1 oder 2, wobei die wenigstens eine Montagevorrichtung (13)
- im Wesentlichen eben oder in einem Querschnitt im Wesentlichen brückenförmig ausgebildet ist, und/oder
- eine erste Montageschnittstelle (18) zur, vorzugsweise lösbaren, Befestigung der wenigstens einen Montagevorrichtung (13) an einer ersten Seitenwand (20) des Möbelkorpus (3) und eine zweite Montageschnittstelle (19) zur, vorzugsweise lösbaren, Befestigung der wenigstens einen Montagevorrichtung (13) an einer von der ersten Seitenwand (20) beabstandeten zweiten Seitenwand (21) des Möbelkorpus (3) aufweist.

4. Führungssystem (1) nach einem der Ansprüche 1 bis 3, wobei der wenigstens eine Träger (4) einen in Längsrichtung des wenigstens einen Trägers (4) in einem Endbereich angeordneten Trägerkopf (22) aufweist, wobei die wenigstens eine Schaltvorrichtung (7) und/oder der wenigstens eine Sensor (8) oder zumindest eine Komponente (71, 72) der wenigstens einen Schaltvorrichtung (7) und/oder des wenigstens einen Sensors (8) am Trägerkopf (22) angeordnet oder anordenbar ist, vorzugsweise wobei der Trägerkopf (22)
- zumindest in Längsrichtung des wenigstens einen Trägers (4) relativ zu einem Grundkörper (23) des wenigstens einen Trägers (4), vorzugsweise begrenzt, verschiebbar gelagert ist, und/oder
- wenigstens eine Parkposition (43) für wenigstens einen mit dem wenigstens einen Türflügel (2) verbindbaren Laufwagen (24) aufweist, und/oder
- an wenigstens einer Kopfführungsschiene (25) verschiebbar gelagert oder lagerbar ist, wobei die wenigstens eine Kopfführungsschiene (25) parallel zur wenigstens einen Trägerführungsschiene (5) angeordnet oder anordenbar ist.

5. Führungssystem (1) nach Anspruch 4, wobei die wenigstens eine Schaltvorrichtung (7) und/oder der wenigstens eine Sensor (8) oder zumindest eine Komponente (71, 72) der wenigstens einen Schaltvorrichtung (7) und/oder des wenigstens einen Sensors (8) über Befestigungsmittel (26), vorzugsweise lösbar, am Trägerkopf (22) befestigbar ist, vorzugsweise wobei die Befestigungsmittel (26)
- als Schrauben (27) ausgebildet sind und/oder wenigstens ein Rastmittel (28) umfassen, und/oder
- derart ausgebildet sind, dass die wenigstens eine Schaltvorrichtung (7) und/oder der wenigstens eine Sensor (8) oder die zumindest eine Komponente (71, 72) der wenigstens einen Schaltvorrichtung (7) und/oder des wenigstens einen Sensors (8) mittels einer Montagebewegung im Wesentlichen quer zur Längsrichtung des wenigstens einen Trägers (4) am Trägerkopf (22) befestigbar ist.

6. Führungssystem (1) nach einem der Ansprüche 1 bis 5, wobei die wenigstens eine Schaltvorrichtung (7) wenigstens eine erste Komponente (71) und wenigstens eine zweite Komponente (72) aufweist, vorzugsweise wobei die wenigstens eine erste Komponente (71) bewegungsgekoppelt mit dem wenigstens einen Träger (4) verbunden oder verbindbar ist und die wenigstens eine zweite Komponente (72) relativ zur wenigstens einen Trägerführungsschiene (5) ortsfest anordenbar ist.

7. Führungssystem (1) nach Anspruch 6, wobei die wenigstens eine erste Komponente (71) als Magnet (30) und die wenigstens eine zweite Komponente (72) als Reedschalter (29) ausgebildet ist, oder umgekehrt.

8. Führungssystem (1) nach einem der Ansprüche 1 bis 7, wobei die Schaltvorrichtung (7) als Lichtschranke ausgebildet ist, vorzugsweise wobei der wenigstens eine Sensor (8) als Lichtsensor ausgebildet ist.

9. Führungssystem (1) nach einem der Ansprüche 1 bis 8, wobei wenigstens eine Steuervorrichtung (32) vorgesehen ist, welche mit der wenigstens einen Schaltvorrichtung (7) und/oder dem wenigstens einen Sensor (8), dem wenigstens einen elektrischen Gerät (11) und wenigstens einer Stromquelle (33) verbindbar ist.

10. Führungssystem (1) nach einem der Ansprüche 1 bis 9, wobei wenigstens eine weitere Führungsschiene (34) vorgesehen ist, welche im Wesentlichen quer zur Trägerführungsschiene (5) anordenbar oder angeordnet ist, wobei wenigstens ein Laufwagen (24) vorgesehen ist, mit welchem ein weiterer Türflügel (36), welche gelenkig mit dem wenigstens einen Türflügel (2), welcher am wenigstens einen Träger (4) anordenbar ist, verbunden oder verbindbar ist, an der wenigstens einen weiteren Führungsschiene (34) lagerbar oder gelagert ist.

11. Führungsanordnung (37) zur Führung wenigstens eines Türflügels (2) relativ zu einem Möbelkorpus (3), wobei die Führungsanordnung (37) wenigstens zwei Führungssysteme (1) nach einem der vorhergehenden Ansprüche umfasst.

12. Führungsanordnung (37) nach dem vorhergehenden Anspruch, wobei die wenigstens zwei Führungssysteme (1) wenigstens eine gemeinsame Steuervorrichtung (32) aufweisen, vorzugsweise wobei die Stromzufuhr zu wenigstens einem elektrischen Gerät (11)
- durch wenigstens ein Signal (10) von wenigstens einem Führungssystem (1), und/oder
- durch je wenigstens ein Signal (10) von den wenigstens zwei Führungssystemen (1)
unterbrechbar und/oder freigebbar ist.

13. Möbel (38) mit einem Möbelkorpus (3) und wenigstens einem Türflügel (2), wobei der Möbelkorpus (3) wenigstens einen Innenraum (39) aufweist, wobei der wenigstens eine Innenraum (39) mit dem wenigstens einen Türflügel (2) zumindest bereichsweise abdeckbar ist und in welchem das wenigstens eine elektrische Gerät (11) anordenbar ist, **dadurch gekennzeichnet, dass** das Möbel (38) wenigstens ein Führungssystem (1) nach einem der Ansprüche 1 bis 10 oder wenigstens eine Führungsanordnung (37) nach Anspruch 11 oder 12 aufweist.

14. Möbel (38) nach Anspruch 13, wobei wenigstens ein schachtförmiger Hohlraum (40) vorgesehen ist, in welchem der wenigstens eine Türflügel (2) versenkbar ist, vorzugsweise wobei die wenigstens eine Schaltvorrichtung (7) und/oder der wenigstens eine Sensor (8) oder die wenigstens eine Schnittstelle (9) derart relativ zum Möbelkorpus (3) positioniert oder positionierbar ist, dass die wenigstens eine Schaltvorrichtung (7) und/oder der wenigstens eine Sensor (8) in einer, vorzugsweise vollständig, versenkten Stellung des wenigstens einen Türflügels (2) im Hohlraum (40) schaltbar und/oder auslösbar ist.

## Claims

1. Guiding system (1) for guiding at least one door leaf (2) relative to a furniture carcass (3), comprising at least one support (4), on which the at least one door leaf (2) can be mounted, preferably in an articulated manner, at least one, preferably at least two, support-guiding rail(s) (5) spaced apart from one another in a longitudinal direction of the at least one support (4) and at least one guiding device (6), with which the at least one support (4) can be or is mounted displaceably on the at least one support-guiding rail (5), preferably in a direction substantially transverse to a longitudinal direction of the at least one support (4), wherein the guiding system (1) comprises at least one switch device (7) and/or at least one sensor (8) or at least one interface (9) for fastening, preferably detachably, the at least one switch device (7) and/or the at least one sensor (8), wherein the at least one switch device (7) and/or the at least one sensor (8) are/is formed to generate at least one signal (10), with which the power supply to at least one electrical appliance (11), preferably kitchen appliance (12), can be interrupted and/or enabled, wherein the at least one switch device (7) and/or the at least one sensor (8) and preferably the at least one interface (9) is or can be positioned relative to the at least one support-guiding rail (5) in such a way that the at least one switch device (7) and/or the at least one sensor (8) can be switched and/or triggered in at least one predetermined position of the at least one support (4) and thus of the at least one door leaf (2) relative to the at least one support-guiding rail (5), preferably wherein the at least one predetermined position is an end position of the at least one support (4) relative to the at least one support-guiding rail (5), **characterized in that** at least one installation device (13) is provided, on which the at least one switch device (7) and/or the at least one sensor (8) or at least one component (71, 72) of the at least one switch device (7) and/or of the at least one sensor (8) can be installed fixedly relative to the at least one support-guiding rail (5), wherein at least one adapter (14) is provided, with which the at least one switch device (7) and/or the at least one sensor (8) or the at least one component (71, 72) of the at least one switch device (7) can be installed with at least two different spacings relative to the at least one installation device (13), thereby allowing the at least one switch device (7) and/or the at least one sensor (8) or the at least one component (71, 72) of the at least one switch device (7) to be positioned as desired.

2. Guiding system (1) according to claim 1, wherein the at least one adapter (14) has at least one first fastening interface (15) for fastening, preferably detachably, the at least one adapter (14) to the at least one installation device (13) and at least one second fastening interface (16) spaced apart therefrom in a height direction of the at least one adapter (14) for fastening, preferably detachably, the at least one switch device (7) and/or the at least one sensor (8) or the at least one component (71, 72) of the at least one switch device (7) and/or of the at least one sensor (8), preferably wherein
- the at least one adapter (14) is selected from a group of at least two adapters (14), the two fastening interfaces (15, 16) of which are spaced apart from one another to different extents in the height direction, and/or
- the at least one adapter (14) has at least one adjustment device (17), with which a position of the two fastening interfaces (15, 16) relative to one another in the height direction can be adjusted.

3. Guiding system (1) according to claim 1 or 2, wherein the at least one installation device (13)
- is formed substantially flat or substantially bridge-shaped in a cross-section, and/or
- has a first installation interface (18) for fastening, preferably detachably, the at least one installation device (13) to a first side wall (20) of the furniture carcass (3) and a second installation interface (19) for fastening, preferably detachably, the at least one installation device (13) to a second side wall (21) of the furniture carcass (3) spaced apart from the first side wall (20).

4. Guiding system (1) according to one of claims 1 to 3, wherein the at least one support (4) has a support head (22) arranged in an end region in the longitudinal direction of the at least one support (4), wherein the at least one switch device (7) and/or the at least one sensor (8) or at least one component (71, 72) of the at least one switch device (7) and/or of the at least one sensor (8) is or can be arranged on the support head (22), preferably wherein the support head (22)
- is mounted displaceably, preferably to a limited extent, at least in the longitudinal direction of the at least one support (4) relative to a main body (23) of the at least one support (4), and/or
- has at least one parking position (43) for at least one carriage (24) that can be connected to the at least one door leaf (2), and/or
- is or can be mounted displaceably on at least one head-guiding rail (25), wherein the at least one head-guiding rail (25) is or can be arranged parallel to the at least one support-guiding rail (5).

5. Guiding system (1) according to claim 4, wherein the at least one switch device (7) and/or the at least one sensor (8) or at least one component (71, 72) of the at least one switch device (7) and/or of the at least one sensor (8) can be fastened, preferably detachably, to the support head (22) via fastening means (26), preferably wherein the fastening means (26)
- are formed as screws (27) and/or comprise at least one catch means (28), and/or
- are formed in such a way that the at least one switch device (7) and/or the at least one sensor (8) or the at least one component (71, 72) of the at least one switch device (7) and/or of the at least one sensor (8) can be fastened to the support head (22) by means of an installation movement substantially transverse to the longitudinal direction of the at least one support (4).

6. Guiding system (1) according to one of claims 1 to 5, wherein the at least one switch device (7) has at least one first component (71) and at least one second component (72), preferably wherein the at least one first component (71) is or can be connected in a movement-coupled manner to the at least one support (4) and the at least one second component (72) can be arranged fixedly relative to the at least one support-guiding rail (5).

7. Guiding system (1) according to claim 6, wherein the at least one first component (71) is formed as a magnet (30) and the at least one second component (72) is formed as a reed switch (29) or vice versa.

8. Guiding system (1) according to one of claims 1 to 7, wherein the switch device (7) is formed as a light barrier, preferably wherein the at least one sensor (8) is formed as a light sensor.

9. Guiding system (1) according to one of claims 1 to 8, wherein at least one control device (32) is provided, which can be connected to the at least one switch device (7) and/or the at least one sensor (8), the at least one electrical appliance (11) and at least one power source (33).

10. Guiding system (1) according to one of claims 1 to 9, wherein at least one further guiding rail (34) is provided, which can be or is arranged substantially transverse to the support-guiding rail (5), wherein at least one carriage (24) is provided, with which a further door leaf (36), which is or can be connected in an articulated manner to the at least one door leaf (2), which can be arranged on the at least one support (4), can be or is mounted on the at least one further guiding rail (34).

11. Guiding arrangement (37) for guiding at least one door leaf (2) relative to a furniture carcass (3), wherein the guiding arrangement (37) comprises at least two guiding systems (1) according to one of the preceding claims.

12. Guiding arrangement (37) according to the preceding claim, wherein the at least two guiding systems (1) have at least one common control device (32), preferably wherein the power supply to at least one electrical appliance (11) can be interrupted and/or enabled
- by at least one signal (10) from at least one guiding system (1), and/or
- by at least one signal (10) each from the at least two guiding systems (1).

13. Piece of furniture (38) with a furniture carcass (3) and at least one door leaf (2), wherein the furniture carcass (3) has at least one interior (39), wherein the at least one interior (39) can be covered by the at least one door leaf (2) at least in areas and in which interior the at least one electrical appliance (11) is or can be arranged, **characterized in that** the piece of furniture (38) has at least one guiding system (1) according to one of claims 1 to 10 or at least one guiding arrangement (37) according to claim 11 or 12.

14. Piece of furniture (38) according to claim 13, wherein at least one shaft-shaped cavity (40) is provided, in which the at least one door leaf (2) can be sunk, preferably wherein the at least one switch device (7) and/or the at least one sensor (8) or the at least one interface (9) is or can be positioned relative to the furniture carcass (3) in such a way that the at least one switch device (7) and/or the at least one sensor (8) can be switched and/or triggered in a, preferably completely, sunken position of the at least one door leaf (2) in the cavity (40).

## Revendications

1. Système de guidage (1) pour le guidage d'au moins un vantail de porte (2) par rapport à un corps de meuble (3), comprenant au moins un support (4), sur lequel ledit au moins un vantail de porte (2) peut être monté, de préférence de manière articulée, au moins un rail de guidage de support (5), de préférence au moins deux espacés l'un de l'autre dans une direction longitudinale dudit au moins un support (4), et au moins un dispositif de guidage (6) au moyen duquel ledit au moins un support (4) peut être monté mobile, ou est monté mobile, sur ledit au moins un rail de guidage de support (5), de préférence dans une direction sensiblement transversale à une direction longitudinale dudit au moins un support (4), le système de guidage (1) comprenant au moins un dispositif de commutation (7) et/ou au moins un capteur (8) et de préférence au moins une interface (9) pour la fixation, de préférence amovible, dudit au moins un dispositif de commutation (7) et/ou dudit au moins un capteur (8), ledit au moins un dispositif de commutation (7) et/ou ledit au moins un capteur (8) étant conçu(s) pour générer au moins un signal (10) au moyen duquel l'alimentation électrique d'au moins un appareil électrique (11), de préférence un appareil de cuisine (12), peut être interrompue et/ou établie, ledit au moins un dispositif de commutation (7) et/ou ledit au moins un capteur (8), et de préférence ladite au moins une interface (9), étant positionné(s) ou pouvant être positionné(s) par rapport audit au moins un rail de guidage de support (5) de telle sorte que ledit au moins un dispositif de commutation (7) et/ou ledit au moins un capteur (8) peut être commuté et/ou déclenché dans au moins une position prédéterminée dudit au moins un support (4) et donc dudit au moins un vantail de porte (2) par rapport audit au moins un rail de guidage de support (5), ladite au moins une position prédéterminée étant de préférence une position d'extrémité dudit au moins un support (4) par rapport audit au moins un rail de guidage de support (5), **caractérisé en ce qu'**il est prévu au moins un dispositif de montage (13) sur lequel ledit au moins un dispositif de commutation (7) et/ou ledit au moins un capteur (8), ou au moins un composant (71, 72) dudit au moins un dispositif de commutation (7) et/ou dudit au moins un capteur (8), peut être monté de manière fixe par rapport audit au moins un rail de guidage de support (5), au moins un adaptateur (14) étant prévu au moyen duquel ledit au moins un dispositif de commutation (7) et/ou ledit au moins un capteur (8) ou ledit au moins un composant (71, 72) dudit au moins un dispositif de commutation (7) peut être monté à au moins deux distances différentes par rapport audit au moins un dispositif de montage (13), de sorte que ledit au moins un dispositif de commutation (7) et/ou ledit au moins un capteur (8) ou ledit au moins un composant (71, 72) dudit au moins un dispositif de commutation (7) peut être positionné comme souhaité.

2. Système de guidage (1) selon la revendication 1, dans lequel ledit au moins un adaptateur (14) présente au moins une première interface de fixation (15) pour la fixation, de préférence amovible, dudit au moins un adaptateur (14) audit au moins un dispositif de montage (13), et au moins une deuxième interface de fixation (16), espacée de la première dans une direction en hauteur dudit au moins un adaptateur (14), pour la fixation, de préférence amovible, dudit au moins un dispositif de commutation (7) et/ou dudit au moins un capteur (8) ou dudit au moins un composant (71, 72) dudit au moins un dispositif de commutation (7) et/ou dudit au moins un capteur (8), de préférence :
- ledit au moins un adaptateur (14) étant choisi parmi un groupe d'au moins deux adaptateurs (14), dont les deux interfaces de fixation (15, 16) sont espacées l'une de l'autre différemment dans la direction en hauteur, et/ou
- ledit au moins un adaptateur (14) présente au moins un dispositif de réglage (17) au moyen duquel une position des deux interfaces de fixation (15, 16) l'une par rapport à l'autre peut être réglée dans la direction en hauteur.

3. Système de guidage (1) selon la revendication 1 ou 2, dans lequel ledit au moins un dispositif de montage (13)
- est réalisé sensiblement plat ou présente, en section transversale, une forme essentiellement en pont, et/ou
- présente une première interface de montage (18) pour la fixation, de préférence amovible, dudit au moins un dispositif de montage (13) à une première paroi latérale (20) du corps de meuble (3), et une deuxième interface de montage (19) pour la fixation, de préférence amovible, dudit au moins un dispositif de montage (13) à une deuxième paroi latérale (21) du corps de meuble (3) espacée de la première paroi latérale (20).

4. Système de guidage (1) selon l'une des revendications 1 à 3, dans lequel ledit au moins un support (4) présente une tête de support (22) disposée dans une zone d'extrémité dans la direction longitudinale dudit au moins un support (4), ledit au moins un dispositif de commutation (7) et/ou ledit au moins un capteur (8) ou au moins un composant (71, 72) dudit au moins un dispositif de commutation (7) et/ou dudit au moins un capteur (8) étant disposé, ou pouvant être disposé, sur la tête de support (22),
de préférence la tête de support (22)
- étant montée mobile, ou pouvant être montée mobile, de préférence de manière limitée, par rapport à un corps de base (23) dudit au moins un support (4), au moins dans la direction longitudinale dudit au moins un support (4), et/ou
- présentant au moins une position de stationnement (43) pour au moins un chariot de roulement (24) pouvant être relié audit au moins un vantail de porte (2), et/ou
- étant montée mobile, ou pouvant être montée mobile, sur au moins un rail de guidage de tête (25), ledit au moins un rail de guidage de tête (25) étant disposé, ou pouvant être disposé, parallèlement audit au moins un rail de guidage de support (5).

5. Système de guidage (1) selon la revendication 4, dans lequel ledit au moins un dispositif de commutation (7) et/ou ledit au moins un capteur (8) ou au moins un composant (71, 72) dudit au moins un dispositif de commutation (7) et/ou dudit au moins un capteur (8) peut être fixé, de préférence de manière amovible, à la tête de support (22) au moyen de moyens de fixation (26),
de préférence les moyens de fixation (26)
- étant réalisés sous la forme de vis (27) et/ou comprenant au moins un moyen d'encliquetage (28), et/ou
- étant réalisés de telle sorte que ledit au moins un dispositif de commutation (7) et/ou ledit au moins un capteur (8) ou ledit au moins un composant (71, 72) dudit au moins un dispositif de commutation (7) et/ou dudit au moins un capteur (8) peut être fixé à la tête de support (22) au moyen d'un mouvement de montage sensiblement transversal à la direction longitudinale dudit au moins un support (4).

6. Système de guidage (1) selon l'une quelconque des revendications 1 à 5, dans lequel ledit au moins un dispositif de commutation (7) présente au moins un premier composant (71) et au moins un deuxième composant (72), ledit au moins un premier composant (71) étant de préférence relié, ou pouvant être relié, audit au moins un support (4) de manière couplée en mouvement, et ledit au moins un deuxième composant (72) pouvant être disposé de manière fixe par rapport audit au moins un rail de guidage de support (5).

7. Système de guidage (1) selon la revendication 6, dans lequel ledit au moins un premier composant (71) est réalisé sous la forme d'un aimant (30), et ledit au moins un deuxième composant (72) sous la forme d'un interrupteur Reed (29), ou inversement.

8. Système de guidage (1) selon l'une des revendications 1 à 7, dans lequel le dispositif de commutation (7) est réalisé sous la forme d'une barrière lumineuse, ledit au moins un capteur (8) étant de préférence réalisé sous la forme d'un capteur de lumière.

9. Système de guidage (1) selon l'une des revendications 1 à 8, dans lequel il est prévu au moins un dispositif de commande (32) pouvant être relié audit au moins un dispositif de commutation (7) et/ou audit au moins un capteur (8), audit au moins un appareil électrique (11) et à au moins une source de courant (33).

10. Système de guidage (1) selon l'une des revendications 1 à 9, dans lequel il est prévu au moins un autre rail de guidage (34) qui peut être disposé, ou qui est disposé, sensiblement transversalement au rail de guidage de support (5), au moins un chariot de roulement (24) étant prévu au moyen duquel un autre vantail de porte (36) peut être monté, ou est monté, sur ledit au moins un autre rail de guidage (34), lequel autre vantail de porte est relié, ou peut être relié, de manière articulée audit au moins un vantail de porte (2), lequel peut être disposé sur ledit au moins un support (4).

11. Agencement de guidage (37) pour le guidage d'au moins un vantail de porte (2) par rapport à un corps de meuble (3), l'agencement de guidage (37) comprenant au moins deux systèmes de guidage (1) selon l'une des revendications précédentes.

12. Agencement de guidage (37) selon la revendication précédente, dans lequel lesdits au moins deux systèmes de guidage (1) présentent au moins un dispositif de commande commun (32), l'alimentation électrique d'au moins un appareil électrique (11) pouvant de préférence être interrompue et/ou établie
- par au moins un signal (10) provenant d'au moins un système de guidage (1), et/ou
- par au moins un signal (10) provenant de chacun desdits au moins deux systèmes de guidage (1).

13. Meuble (38) comportant un corps de meuble (3) et au moins un vantail de porte (2), le corps de meuble (3) présentant au moins un espace intérieur (39), ledit au moins un espace intérieur (39) pouvant être recouvert au moins partiellement par ledit au moins un vantail de porte (2), et dans lequel ledit au moins un appareil électrique (11) peut être disposé, **caractérisé en ce que** le meuble (38) présente au moins un système de guidage (1) selon l'une des revendications 1 à 10 ou au moins un agencement de guidage (37) selon la revendication 11 ou 12.

14. Meuble (38) selon la revendication 13, dans lequel il est prévu au moins une cavité (40) en forme de puits dans laquelle ledit au moins un vantail de porte (2) peut être escamoté, ledit au moins un dispositif de commutation (7) et/ou ledit au moins un capteur (8) ou ladite au moins une interface (9) étant de préférence positionné(s), ou pouvant de préférence être positionné(s), par rapport au corps de meuble (3) de telle sorte que ledit au moins un dispositif de commutation (7) et/ou ledit au moins un capteur (8) peut être commuté et/ou déclenché dans une position escamotée, de préférence complètement escamotée, dudit au moins un vantail de porte (2) dans la cavité (40).
